# EUROPÄISCHE PATENTSCHRIFT

(11) **EP 3 335 948 B1**
(45) Veröffentlichungstag und Bekanntmachung des Hinweises auf die Patenterteilung: **25.09.2019**
(21) Anmeldenummer: 17207429.6
(22) Anmeldetag: 14.12.2017
(51) Int. Cl.: B60S 9/02, B60S 9/12

(54) **HUBSTÜTZENANORDNUNG MIT EINER SICHERUNGSEINRICHTUNG**
LIFTING SUPPORT ASSEMBLY WITH A SAFETY DEVICE
DISPOSITIF BÉQUILLE DE LEVAGE DOTÉ D'UN DISPOSITIF DE SÉCURITÉ

(30) Priorität: 15.12.2016 DE 202016107009 U; 20.03.2017 DE 102017105974
(43) Veröffentlichungstag der Anmeldung: 20.06.2018
(73) Patentinhaber: Alois Kober GmbH, 89359 Kötz (DE)
(72) Erfinder: Hartleff, Christian, 89312 Günzburg (DE); Lukas, Maximilian, 87757 Kirchheim (DE); Willmann, Uwe, 89359 Kleinkötz (DE); Eshuis, Hermen, 7462 MV Rijssen (NL); Rasche, Philipp, D-48599 Gronau (DE)
(74) Vertreter: Ernicke, Klaus Stefan

(56) Entgegenhaltungen:
- US-A- 5 312 119
- US-A1- 2016 251 001
- US-B1- 6 877 773
- US-B1- 7 025 361

## Beschreibung

Die Erfindung betrifft eine Hubstützenanordnung mit einer Sicherungseinrichtung und einem Verfahren mit den Merkmalen im Verfahrens- und Vorrichtungshauptanspruch. Aus der Praxis sind zentrale und dezentrale Hubstützenanordnungen für ein motorisiertes Straßenfahrzeug mit mehreren Hubstützen und einer Steuereinrichtung bekannt.

Die US 2011/0024706 A1 zeigt beispielhaft eine dezentrale hydraulische Hubstützenanordnung für den Einsatz bei schwergewichtigen und großen Wohnmobilen im LKW-Format. Aus der US 5,013,011 A und der US 5,312,119 A ist es bekannt, abgesenkte Hubstützen bei einem Motorstart des Straßenfahrzeugs zwingend automatisch einzufahren.

Eine gattungsgemäße Hubstützenanordnung ist aus der US 7 025 361 B1 bekannt.

Es ist Aufgabe der vorliegenden Erfindung, eine Hubstützenanordnung zu verbessern.

Die Erfindung löst diese Aufgabe mit den Merkmalen im Verfahrens- und Vorrichtungshauptanspruch.

Die beanspruchte Sicherungstechnik, d.h. die Sicherungseinrichtung und das Verfahren sowie eine damit ausgerüstete und betriebene Hubstützenanordnung, haben verschiedene Vorteile.

Durch die Sicherungstechnik können Fehlfunktionen der Hubstützenanordnung auf Grund von Fehlbedienung und/oder fehlerhafter Steuertechnik vermieden werden. Insbesondere kann verhindert werden, dass die Hubstützenanordnung unbeabsichtigt in Gang gesetzt wird. Das in Gang setzen der Hubstützenanordnung und ihrer Hubstützen ist nur durch eine absichtliche Betätigung einer hierfür vorgesehenen Betätigungseinrichtung möglich. Ein etwaiger Defekt in der Hardware, insbesondere in der steuerungstechnischen Hardware, führt nicht zu einer Gefährdungssituation.

Die Sicherungseinrichtung kann als Steuermodul ausgebildet sein. Sie kann der Steuereinrichtung der Hubstützenanordnung als Software- und/oder Hardwaremodul zugeordnet werden. Dadurch ist eine Implementierung bei Erstausrüstung oder auch eine Nachrüstung oder Umrüstung von Hubstützenanordnungen mit der Sicherheitstechnik möglich. Die Hubstützenanordnung kann von der Sicherungseinrichtung direkt oder mittelbar über die Steuereinrichtung angesteuert werden.

Die Hubstützenanordnung kann beliebig ausgebildet sein. Besondere Vorteile bestehen bei einer dezentralen hydraulischen Hubstützenanordnung mit autonomen hydraulischen Hubstützen. Alternativ kann eine Hubstützenanordnung z.B. motorisierte Schwenkstützen oder dgl. aufweisen. Die Hubstützen können starr oder mittels einer Stelleinrichtung beweglich, z.B. schwenkbar am Fahrzeug gelagert werden.

Die Sicherheitseinrichtung kann mittels eines Weckmoduls bedarfsweise aufgeweckt werden, insbesondere durch ein Signal eines Gebers für ein Startsignal des Straßenfahrzeugs und/oder durch ein Bediensignal eines Bediengeräts. Hierbei können auch weitere Komponenten, insbesondere die Steuereinrichtung, aufgeweckt werden. Das Startsignal kann z.B. ein Zündungssignal oder ein Bussignal von einem Fahrzeugbus sein. Der Standby- oder Schlafmodus spart Energie. Andererseits kann über das Gebersignal eine permanente Sicherheitsüberwachung des Straßenfahrzeugs erfolgen. Die Sicherheitseinrichtung wird erst bei einer Gefährdungssituation oder auf das besagte Bediensignal hin aufgeweckt.

Die beanspruchte Sicherungstechnik kann unterschiedlichen Sicherheitserfordernissen gerecht werden.

Zum einen kann der Fall eintreten, dass bei ausgefahrenen Hubstützen das Straßenfahrzeug durch Einschalten der Zündung gestartet wird und dann eventuell losfährt. Eine solche gefahrenträchtige Situation kann über ein Startsignal des besagten Gebers detektiert werden. Dies kann z.B. ein Zündsignal und/oder ein Bussignal sein, wobei der Geber z.B. eine Klemme oder die Fahrzeugsteuerung sein kann. Die Sicherungstechnik überprüft dann mittels eines Prüfmoduls die aktuelle Hubstützenstellung. Wenn die Hubstützen ausgefahren sind, wird von der Sicherungstechnik ein Warnsignal emittiert, dass den Fahrer vor einem Wegfahren warnt.

Die Sicherungseinrichtung belässt dabei die Hubstützen in der aktuellen Stellung. Ein automatisches Einfahren der Hubstützen und ein damit einhergehendes Absenken des Fahrzeugs wird verhindert. Dies dient unter anderem der Unfallsicherheit, falls sich gerade eine Person, ein Tier oder auch ein Gegenstand unter dem Fahrzeug befindet. Die Hubstützen werden erst auf einen Bedienerbefehl und auf ein plausibles Bediensignal des Bediengeräts hin eingefahren.

Andererseits muss das Startsignal noch nicht unbedingt bedeuten, dass der Fahrzeugbediener tatsächlich losfahren will. Er kann die Zündung und damit das Bordnetz sowie ggf. den Fahrzeugmotor auch aus anderen Gründen einschalten, z.B. um Radio zu hören, ein Navigationsgerät zu bedienen oder eine Stromversorgung für ein Gerät oder Aggregat im Fahrzeugaufbau oder extern zu aktivieren.

Die Erkennungssicherheit für die Bedeutung des empfangenen Startsignals kann durch eine Prüfeinrichtung erhöht werden, die den aktuellen Betriebszustand und die Wegfahrbereitschaft des Straßenfahrzeugs detektiert und bewertet. Hierbei können z.B. die Handbremsenstellung, eine Sitzbelegung, das Einlegen eines Fahrgangs im Fahrzeuggetriebe oder dgl. sensorisch erfasst und ausgewertet werden. Hieraus kann rückgeschlossen werden, ob tatsächlich auf das Startsignal hin ein Losfahren wahrscheinlich ist. Das Gebersignal kann von der Sicherungstechnik entsprechend bewertet werden. Die Sicherungstechnik kann auf Grund dieser Bewertung entscheiden, ob sie bei einem empfangenen Gebersignal die Sicherungsfunktion und die Emission des Warnsignals auslöst oder nicht.

Das Warnsignal kann auf beliebig geeignete Weise im oder am Straßenfahrzeug emittiert werden. Bei einer signaltechnischen Verbindung mit der Fahrzeugsteuerung kann eine Signalisierung auch über bordeigene Mittel, z.B. ein Display im Armaturenbrett, erfolgen.

Ein anderer Sicherungsaspekt betrifft die Ausfallsicherheit der Hardware. Die beanspruchte Sicherungstechnik sieht jeweils mehrere, insbesondere zwei, parallele Sicherungskreise für das Ansteuern der Hubstützen vor. Hierbei werden über einen eigenen Controller jeweils zum einen der Antrieb und zum anderen eine Steueranordnung der Hubstütze getrennt angesteuert. Die Controller können eigenständige Steuerhardware oder eigenständige Funktionen mit Implementierung in einen gemeinsamen Microcontroller oder Prozessor sein. Die Controller und ihre elektronischen Bauteile werden jeweils von einer Controllerüberwachung permanent auf Ausfall überwacht. Eine Ansteuerung und Betätigung der Hubstützen erfolgt nur bei einem positiven Überwachungsergebnis.

Ein anderer Sicherungsaspekt betrifft die Verlässlichkeit des Bedienungssignals. Dies kann mit einem Plausibilitätsmodul überprüft werden. Dieses kann zwischen einem beabsichtigten Bedienungssignal und einem versehentlichen Signal bzw. einer Fehlbedienung unterscheiden. Das Bediengerät kann mit seinen Bedienelementen entsprechend ausgestaltet sein, um auf der Seite der Befehlsgenerierung zusätzliche Sicherheit zu bieten. Ein Eingabebefehl wird z.B. erst nach einem längeren und/oder kräftigeren Betätigen eines Bedienelements als solcher erkannt und verarbeitet.

Eine sichere Bedienung der Hubstützenanordnung ist möglich, wenn ein Startsignal des Gebers ausbleibt oder negativ bzw. als sicherheitstechnisch irrelevant bewertet wird, ein beabsichtigtes Bediensignal detektiert wird und die Sicherungskreise mit den Controllern für die Ansteuerung der Hubstützen intakt sind. Dies wird als sicherer Betriebsfall erkannt, so dass der Bediener die Hubstützenanordnung nach Wunsch und uneingeschränkt bedienen kann.

Ein weiterer Sicherungsaspekt betrifft die Nivellierung der Hubstützenanordnung und des Straßenfahrzeugs. Wenn die Nivellierung beendet ist und die gewünschte Fahrzeuglage, insbesondere horizontale Lage oder Fahrzeugneigung, eingenommen ist, wird von der Sicherungstechnik überprüft, ob alle Hubstützen Bodenkontakt haben und belastet sind. Hierbei können etwaige Fehlstellung mit z.B. drei tragenden Hubstützen und einer schwebenden Hubstütze erkannt werden. Die Sicherungstechnik bringt im Bedarfsfall die unzureichend belastete Hubstütze in eine Ausfahrstellung, in der sie Bodenkontakt hat und eine Mindestbelastung wie die anderen Hubstützen aufnimmt. Die ausgefahrenen Hubstützen können hierfür auf Erreichen eines vorgegebenen Mindest- oder Schwellwerts oder eines gleichen Endwerts der Kraft- oder Druckbelastung durch entsprechend gesteuertes bzw. geregeltes Ausfahren eingestellt werden. Die Sicherungstechnik kann hierfür ein Nachsetzmodul aufweisen.

Durch das Nachsetzen wird eine hohe Standsicherheit des nivellierten Fahrzeugs erreicht, die auch etwaigen Belastungsänderungen, z.B. Gewichtsverlagerungen im Fahrzeug standhält. Eine dezentrale, insbesondere hydraulische, Hubstützenanordnung mit autonomen Hubstützen hat den besonderen Vorteil eines feinfühligen Ansprechens und eines ruckelfreien Ausfahrens der Hubstützen.

Die bevorzugte Fahrgestell- und Hubstützentechnik hat verschiedene Vorteile. Die hydraulischen Hubstützen können das Fahrgestell und das Straßenfahrzeug besser und sicherer abstützen. Die Hubstützen lassen sich insbesondere mit Leichtbau-Fahrgestellen kombinieren. Diese weisen kleinformatige und dünnwandige Fahrgestellteile auf, welche für die Aufnahme von Hubstützen und Stützlasten nicht überall geeignet und ausgebildet sind.

Die hydraulischen Hubstützen und die dezentrale hydraulische Hubstützenanordnung ermöglichen eine raumoptimierte Unterbringung am Fahrgestell des Straßenfahrzeugs. Hierbei kann ein Anbau vor allem an den Längsträgern eines Fahrgestells erfolgen, wobei der Innenraum im Fahrgestell, insbesondere in der bevorzugten Ausbildung als Leiterrahmen, für andere Zwecke frei bleiben kann. Der Aufbau- bzw. Fahrzeughersteller kann dadurch auch den im und am Fahrgestell befindlichen Raum für seine Zwecke optimal nutzen und wird hierbei durch die hydraulischen Hubstützen bzw. die dezentrale hydraulische Hubstützenanordnung im Wesentlichen nicht eingeschränkt. In einem eigenen Erfindungsaspekt sind der hydraulische Aktor und die hydraulische Versorgungseinheit einer hydraulischen Hubstütze bzw. ihrer Stützeinheit als separate und mit gegenseitiger Distanz am Straßenfahrzeug eigenständig montierbare Einheiten ausgestaltet, die durch schlauchförmige hydraulische Leitungen miteinander verbunden sind. Diese Einzelkomponenten bauen klein und lassen sich durch die getrennte Anordnung jede für sich optimal am Straßenfahrzeug, insbesondere an dessen Fahrgestell, unterbringen und montieren. Dank der schlauchförmigen und bevorzugt biegeelastischen hydraulischen Leitungen können die Einbaulagen und die Abstände von Aktor und Versorgungseinheit je nach Fahrzeug variieren und an die jeweiligen Gegebenheiten optimiert angepasst werden. Der Aktor wird vorzugsweise an der Außenseite des Fahrgestells, insbesondere an der Außenseite von dessen Längsträgern, montiert. Die jeweils zugehörige hydraulische Versorgungseinheit kann wahlweise an der Innenseite oder Außenseite des Fahrgestells bzw. Längsträgers montiert werden. Sie kann auch mit einer Schutzkappe abgedeckt werden.

Günstig ist die Ausbildung des Aktors als mehrstufig teleskopierbarer und beidseitig beaufschlagbarer hydraulischer Zylinder mit beweglicher Kolbenstange und beweglichem Innenrohr sowie hierzu relativ ortsfestem Außenrohr. Ein solcher, z.B. zweistufiger, hydraulischer Zylinder kann gesteuert ausgefahren und eingefahren werden. Hierbei kann die bewegliche Kolbenstange ein- und ausgefahren werden. Sie kann dabei an ihrem freien Ende ein Stützteller aufweisen. Der hydraulische Aktor kann in verschiedenen Ausfahrstellungen auf einfache und sichere Weise blockiert werden, z.B. durch Rückschlagventile. Der hydraulische Aktor kann andererseits auch aktiv gesteuert wieder eingefahren werden. Hierfür ist eine beidseitig fördernde Pumpenanordnung von Vorteil. Alternativ ist eine einseitig fördernde Pumpe mit fester Drehrichtung möglich. In einem weiteren eigenständigen Erfindungsgedanken ist vorgesehen, dass die hydraulische Hubstütze, insbesondere ihr hydraulischer Aktor, starr und relativ ortsfest am Straßenfahrzeug, insbesondere an dessen Fahrgestell, montiert und fixiert werden kann. Die bei vorbekannten Hubstützen übliche zusätzliche Schwenklagerung des Aktors kann entfallen.

Der Verzicht auf diese zusätzliche Beweglichkeit ist besonders für einen hydraulischen Aktor von Vorteil. Er ist knickfest und kann dank relativ großer Ausfahrwege im eingefahrenen Zustand eine kleine Störgröße haben und dadurch eine ausreichende Bodenfreiheit bieten. Andererseits sind die vergrößerten Hubwege bzw. Ausfahrwege und deren gezielte Steuerbarkeit für spezielle Anwendungen von Vorteil, insbesondere zur Erzielung von Sonderpositionen des Fahrzeugs. Dies können z.B. bestimmte gewünschte Neigungen des Fahrgestells sein.

Beispielsweise kann mittels einer absenkbaren hinteren Achsanordnung einerseits das Fahrgestell schräg gestellt werden und darüber hinaus eine zusätzliche Schrägstellung durch die dezentrale hydraulische Hubstützenanordnung erreicht werden. Dies ist z.B. günstig, um den Auffahrwinkel für heckseitige Auffahrrampen zu optimieren und Knickstellen am Übergang zwischen Auffahrrampe und Fahrgestell möglichst zu vermeiden oder zu minimieren. Die beanspruchte hydraulische Hubstützenanordnung kann dabei das schräg gestellte Fahrgestell optimal abstützen und stabilisieren sowie die abgesenkte Achsanordnung entlasten.

Eine lösbare Verbindung eines Trägers und eines Montagebeschlags für die Montage eines hydraulischen Aktors am Straßenfahrzeug, insbesondere Fahrgestell, hat den Vorteil einer einerseits sicheren Halterung, Führung und Fixierung des Aktors und andererseits einer variablen Anbaumöglichkeit an das Straßenfahrzeug, insbesondere an dessen Fahrgestell, je nach gewählter Anbauposition.

Die dezentrale hydraulische Hubstützenanordnung kann weitgehend vereinheitlicht sein und kann untereinander gleiche hydraulische Aktoren und jeweils zugehörige hydraulische Versorgungseinheiten aufweisen. Auch die Träger für deren Montage können gleich sein. Eine Adaption an die jeweilige fahrzeugspezifische Anbausituation kann durch die Montagebeschläge erfolgen. Die dezentrale hydraulische Hubstützenanordnung ist einerseits durch den hohen Vereinheitlichungsgrad aufwandsarm und kostengünstig und bietet andererseits über die Montagebeschläge eine große Adaptionsbreite auf ebenfalls kostengünstige und einfache Weise. Die beanspruchte dezentrale Hubstützenanordnung lässt sich dadurch vielfältig einsetzen. Sie kann bei der Erstausrüstung eines Straßenfahrzeugs oder auch im Wege der Nachrüstung montiert werden. Bei einem Fahrzeugwechsel kann die Hubstützenanordnung vom Betreiber mitgenommen und am nächsten Fahrzeug montiert werden, wobei ggf. nur die Montagebeschläge zu tauschen sind.

Der hydraulische Aktor und die hydraulische Versorgungseinheit nebst den verbindenden hydraulischen Leitungen bilden einen geschlossenen Hydraulikkreis. Die hydraulische Hubstütze bzw. ihre Stützeinheit sind dadurch autonom und bedürfen keiner externen Zuführung von Hydraulikflüssigkeit.

Es genügt die Zuführung von Energie für die Pumpenanordnung, insbesondere von elektrischem Strom für einen elektrischen Pumpenantrieb, vorzugsweise Gleichstrom für einen elektrischen Gleichstrommotor. Durch die autonome Ausbildung der hydraulischen Hubstützen und die dezentrale Hubstützenanordnung wird nur wenig Platz im Straßenfahrzeug bzw. im Fahrgestell benötigt. Der Leitungsaufwand wird reduziert und kann sich auf elektrische Leitungen beschränken. Diese Leitungen für Leistungs- und Signalströme sind flexibel und brauchen wenig Platz. Sie lassen sich ohne größeren Aufwand am Fahrzeug verlegen und an die jeweilige Einbausituation adaptieren.

Die hydraulische Versorgungseinheit weist eine Pumpenanordnung, einen Tank für Hydraulikflüssigkeit, Leitungsanschlüsse für die hydraulischen Leitungen zum Aktor und eine Steueranordnung auf. In einem weiteren eigenständigen Erfindungsgedanken ist vorgesehen, dass die Hubstütze bzw. der Aktor und die Versorgungseinheit einen gemeinsamen geschlossene Hydraulikkreis aufweisen und der Tank eine für die Lebensdauer ausreichende und bevorzugt vollständige Befüllung mit einem Hydraulikfluid (sog. Lifetime-Füllung) hat. Der geschlossene Hydraulikkreis bedarf keiner besonderen Pflegemaßnahmen durch Entlüftung, Nachfüllen etc.. Hydraulikverluste werden durch die kleine Kreisdimension minimiert. An den geschlossenen Hydraulikkreis kann an geeigneter Stelle ein Druckausgleich angeschlossen sein, z.B. im Tank- oder Zylinderbereich. Damit kann auch das Kolbenstangenvolumen kompensiert werden.

Mit dem geschlossenen Hydraulikkreis und einem steuerbaren elektrischen Pumpenantrieb kann ein elektrohydraulischer Direktantrieb für die hydraulische Hubstütze gebildet werden. Die Ein- und Ausfahrbewegungen der hydraulischen Hubstütze können direkt über den Pumpenantrieb bzw. dessen Elektromotor gesteuert werden.

Andererseits weist die hydraulische Versorgungseinheit eine schlanke längliche Form mit einer Reihenanordnung ihrer Komponenten entlang einer Längsachse auf. Dies ist für den Anbau im Bereich eines Leichtbau-Fahrgestells, insbesondere der Längsträger von Vorteil. Günstig ist außerdem, dass die Leitungsanschlüsse für die schlauchförmigen Hydraulikleitungen gemeinsam an einer Stirnseite der Steueranordnung angeordnet und entlang der Längsachse der Versorgungseinheit ausgerichtet sind. Die hierdurch sich ergebenden axialen Leitungsabgänge sind für eine belastungsarme und bauraumgünstige Führung und Verlegung der schlauchförmigen und bevorzugt flexiblen hydraulischen Leitungen von Vorteil. Übermäßige Leitungsbelastungen und insbesondere Knickstellen können vermieden werden. Günstig ist hierbei auch die Anordnung drehbarer Leitungskupplungen an der hydraulischen Versorgungseinheit.

In einem weiteren eigenständigen Erfindungsaspekt ist vorgesehen, dass die Pumpenanordnung der hydraulischen Versorgungseinheit elektrisch angetrieben ist und einen Stromanschluss für eine stromzuführende Leitung sowie einen mit dem Fahrgestell leitend verbindbaren Masseanschluss aufweist. Hierdurch kann der Leitungsaufwand vereinfacht und minimiert werden. Insbesondere können durch den Entfall einer separaten Masseleitung die stromzuführenden Leitungen kleiner, flexibler und leichter verlegbar sowie montierbar gestaltet sein. Das üblicherweise metallische Fahrgestell kann für die Masserückführung zur Energieversorgung, insbesondere zu einer fahrzeugeigenen Batterie oder einem Akku, genutzt werden.

Nach einem anderen eigenständigen erfinderischen Aspekt weist die hydraulische Versorgungseinheit einen im Notfall lösbaren Fluidablass im Hydraulikkreis auf, der z.B. an einer Pumpenanordnung und/oder einer Steueranordnung der hydraulischen Versorgungseinheit angeordnet ist. Der Fluidablass wirkt mit einem Bypass zusammen und erlaubt im Notfall, z.B. bei einer Blockade der hydraulischen Hubstütze, einen Ablass von Hydraulikflüssigkeit und eine Umgehung der Sperrwirkung im Hydraulikkreis. Die abgelassene Hydraulikflüssigkeit kann im geschlossenen Hydraulikkreis über den Bypass zum Tank rückgeführt werden. Die Hubstütze unter dem Eigengewicht des angehobenen Fahrzeugs oder durch ein Werkzeug eingefahren werden.

Nach einem weiteren eigenständig erfinderischen Aspekt weist die autonome hydraulische Hubstütze einen den Bodenkontakt und ggf. eine Einfahr-Endstellung detektierenden Sensor auf. Dies kann z.B. ein Drucksensor im Hydraulikkreis sein. Durch diese Detektionsmöglichkeit kann die Ausfahrbewegung der hydraulischen Hubstütze in Abhängigkeit vom Erreichen eines Bodenkontakts gesteuert und überwacht werden. Außerdem kann mit dem Sensor, insbesondere einem Drucksensor, auch der Kraftaufbau nach Erreichen des Bodenkontakts überprüft werden. Dies kann in Verbindung mit einer Überwachung des Pumpenantriebs der hydraulischen Versorgungseinheit erfolgen, um das Sensorergebnis zu verifizieren und auf Plausibilität zu überprüfen. Im Endeffekt kann überwacht und festgestellt werden, ob die Hubstütze tatsächlich ausgefahren ist und ihre Stützfunktion erfüllt.

Dies kann für die hydraulische Hubstütze einzeln und individuell sowie unabhängig von den anderen Hubstützen überwacht und gesteuert werden. Bei der dezentralen hydraulischen Hubstützenanordnung kann dadurch überwacht und sichergestellt werden, dass tatsächlich bei einer Betätigung alle eingebundenen hydraulischen Hubstützen ausgefahren sind und Bodenkontakt haben sowie ihre Stützfunktionen erfüllen. Bei konventionellen und insbesondere zentralen Hubstützenanordnungen ist dies in der Regel nicht möglich. Bei solchen Hubstützenanordnungen hat üblicherweise eine der Hubstützen keinen Bodenkontakt, sodass kein wirklich sicherer Stand und keine sichere Abstützung gewährleistet sind.

Das gleiche vorgenannte Prinzip der sensorischen Erfassung des Kraftaufbaus kann auch für die sichere Erkennung eines Einfahrstellung und eines dortigen Endanschlags der Hubstütze benutzt werden.

Die dezentrale hydraulische Hubstützenanordnung hat nach einem weiteren eigenständig erfinderischen Aspekt mehrere hydraulische und autonome Hubstützen mit einer jeweils zugeordneten eigenen hydraulischen Versorgungseinheit und außerdem eine gemeinsame Steuereinrichtung für die Hubstützen. Die Steuereinrichtung weist eine integrierte elektrische Leistungs-Endstufe, insbesondere Halbleiter-Endstufe, für die Stromversorgung der elektrischen Pumpenantriebe der hydraulischen autonomen Hubstützen auf. Sie kann ferner eine Steuereinheit bzw. Steuerelektronik beinhalten. Die Stromversorgung und deren Steuerung für elektrischen Pumpenantriebe kann zentral von der Steuereinrichtung bewirkt werden. Die Leistungs-Endstufe und die Steuereinheit bzw. Steuerelektronik können gemeinsam auf einer einzelnen Steuerplatine angeordnet sein.

Dies hat einerseits den Vorteil, dass die Stromversorgung der Hubstützen über kleinere und besser verlegbare elektrische Leitungen erfolgen kann. Andererseits kann die Stromversorgung über eine bevorzugt halbleitergesteuerte elektrische Leistungs-Endstufe besser und genauer als beim Stand der Technik erfolgen, bei dem die elektrischen Pumpenantriebe einzeln und direkt an die Stromversorgung des Fahrzeugs angeschlossen sind und die Stromversorgung von der Steuereinrichtung nur über Relais ein- und ausgeschaltet wird.

Ein weiterer Vorteil ist die direkte Erfassung des Motorstroms der Pumpenantriebe in der Steuereinrichtung, insbesondere mittels der Steuereinheit und/oder der Leistungs-Endstufe. Die Erfassung kann nicht nur die Existenz eines Stromflusses detektieren, sondern kann bedarfsweise auch eine Messung des Motorstroms beinhalten. Die Steuereinrichtung kann diese erfassten Informationen zur gezielten Steuerung der hydraulischen Hubstützen und ihrer hydraulischen Aktoren einsetzen. Die Stromerfassung ermöglicht auch eine Detektion der Endlagen des Zylinders bzw. hydraulischen Aktors. Außerdem kann die besagte Stromerfassung auch mit dem vorgenannten Sensorsignal für die Detektion eines Bodenkontakts oder eines Einfahr-Endanschlags verknüpft und steuertechnisch ausgewertet und genutzt werden.

In einem eigenständigen Erfindungsgedanken ist generell vorgesehen, dass die Steuereinrichtung mit Drucksensoren in einem Hydraulikkreis der Hubstützen signaltechnisch verbunden ist und die mit Bodenkontakt ausgefahrenen sowie ggf. nivellierten Hubstützen auf ein untereinander abgestimmtes hydraulisches Druckverhältnis, insbesondere auf Erreichen eines gleichen vorgegebenen Schwellwerts für den hydraulischen Druck, steuert. Dies kann insbesondere bei oder nach einer Nivellierung geschehen.

Die Steuereinrichtung ist an die Stromversorgung des Straßenfahrzeugs angeschlossen und kann dank der Leistungs-Endstufe die Hubstützen, insbesondere deren jeweiligen elektrischen Pumpenantrieb, einzeln und individuell mit Strom versorgen. Sie kann die Stromversorgung steuern und bedarfsweise auch regeln. Im einfachsten Fall beschränkt sich die Steuerung auf ein Ein- und Ausschalten. Bedarfsweise können komplexere Steuertechniken, z.B. mit variablen Motor- und Pumpenleistungen, gefahren werden. Eine hydraulische Hubstütze kann z.B. mit variablen Geschwindigkeiten, insbesondere im Schnellgang und im Schleichgang ein- und ausgefahren werden.

Insbesondere kann die Steuereinrichtung die Hubstützen einzeln und individuell unter Prüfung ihres Bodenkontakts steuern. Dies ist von Vorteil, um bei der dezentralen Hubstützenanordnung den sicheren Stand und den Bodenkontakt aller hydraulischen Hubstützen sicherzustellen.

Die Ausbildung der Steuereinrichtung ist für die beanspruchte Sicherungstechnik besonders günstig. Sie erleichtert auch die Minimierung und Vereinfachung des Platz-, Bau- und Steueraufwands und die Implementierung der Sicherungstechnik in die Steuereinrichtung.

Die Steuereinrichtung kann ein abgedichtetes Gehäuse aufweisen. Sie kann für eine Montage an einem bevorzugt metallischen Fahrgestell adaptiert sein. Sie lässt sich dadurch platzsparend und ohne räumliche Beeinträchtigung für den Aufbau- oder Fahrzeughersteller an geeigneter Stelle platzieren.

Dies kann z.B. im Bereich einer hinteren Achsordnung erfolgen. Eine andere günstige Anbaustelle befindet sich im Bereich einer Verbindungsstelle zwischen einem vorderen Fahrgestellteil im Bereich der Kabine oder eines evtl. Zukopfes und einem hinteren Fahrgestellbereich, insbesondere einem Anbauchassis, das nachträglich an einem Zugkopf montiert wird. An dieser Verbindungsstelle kann ein Höhenversatz zwischen den Fahrgestellteilen bestehen und durch einen Adapter ausgeglichen werden. In der Nähe dieses Adapters kann die Steuereinrichtung an einem Längsträger des Anbauchassis oder eines hinteren Fahrgestellbereichs montiert werden.

Die Steuereinrichtung wird mit einem einzeln oder mehrfach vorhandenen Bediengerät manuell bedient. Das Bediengerät kann stationär und/oder mobil angeordnet und mit der Steuereinrichtung per Kabel oder drahtlos verbunden sein, wobei entsprechende Kommunikationseinheiten in der Steuereinrichtung und im Bediengerät angeordnet sind. Das Bediengerät kann mehrere Eingabeelemente für wahlweise manuelle Bedienung oder automatische Nivellierung und/oder Eingabeelemente für Sonderpositionen, vorzugsweise Neigungen, des Straßenfahrzeugs, insbesondere Fahrgestells, aufweisen. Sonderpositionen können programmiert bzw. geteached und gespeichert werden.

Die Anordnung einer hydraulischen Hubstütze an einer Einstiegsstelle zu einer Fahrerkabine hat den Vorteil, dass die benachbarte und vorzugsweise von einem Frontantrieb angetriebene vordere Achse direkt entlastet werden kann. Diese Montagestelle hat außerdem wenig Störpotenzial und bietet eine gute und stabile Abstützmöglichkeit, insbesondere an einem axialen Unterzug eines vorderen Fahrgestellteils, insbesondere eines Zugkopfchassis. Für die dortige zerklüftete Anbausituation ist eine getrennte Anordnung von hydraulischem Aktor und hydraulischer Versorgungseinheit nebst flexibler hydraulischer Schlauchverbindung von besonderem Vorteil.

Ferner ist es günstig, die Hubstütze unter der Einstiegstelle und mit Versatz gegenüber der Fahrzeugaußenseite anzuordnen, so dass der Einstieg nicht behindert wird. Durch eine an der Einstiegstelle befindliche Stufe kann die Steifigkeit des Fahrgestells und die Krafteinleitungsmöglichkeit der Hubstütze zusätzlich verbessert werden. In Verbindung mit heckseitigen Hubstützen ergibt sich außerdem der Vorteil einer größeren Stützlänge der Hubstützenanordnung.

Die Montage einer Hubstütze an einer gemeinsamen Verbindungsstelle von mehreren Fahrgestellteilen hat den Vorteil, dass die vorhandene Versteifung der Verbindungsstelle zusätzlich für die Hubstütze genutzt werden kann. Die Verbindungsstelle kann für die Hubstütze und die Fahrgestellteile gemeinsam sein. Hierbei können auch gemeinsame Verbindungsmittel, insbesondere Verschraubungen genutzt werden. An diesen Stellen kann außerdem eine definierte Schnittstelle vorhanden sein, die nur einen vom Fahrzeughersteller autorisierten und mit der Fahrzeugzulassung vereinbarbaren Stützenanbau erlaubt. Die Krafteinleitung kann durch verformte und formschlüssig ineinander greifende Verbindungselemente zusätzlich stabilisiert werden.

Solche gemeinsamen Verbindungsstellen von Fahrgestellteilen und Hubstütze versteifen außerdem die Fahrgestellteile und ermöglichen deren Optimierung. Zudem bieten die Verbindungsstellen besonders günstige Montagestellen, die ggf. auch eine besonders vorteilhafte große Montagehöhe ermöglichen, insbesondere unter Einbeziehung eines aufrechten Adapters zum Höhenausgleich bei einem Anbauchassis. Hierdurch können Biegemomente am Fahrgestell besser eingeleitet und aufgenommen werden.

Besonders günstige Verbindungsstellen zwischen Fahrgestellteilen befinden sich zwischen Längsträgern des Fahrgestells und einer Heckverlängerung und/oder zwischen den besagten Längsträgern und einem Achsbock. Die Verbindungsstelle zu einer Heckverlängerung ermöglicht eine besonders lastgünstige Position einer Hubstütze, mit der besonders auch Zusatzlasten im Heckbereich optimal aufgenommen und abgestützt werden können.

Die vorgenannten eigenständigen Erfindungsaspekte der hydraulischen Hubstütze, der dezentralen hydraulischen Hubstützenanordnung und des damit ausgerüsteten Fahrgestells bzw. Straßenfahrzeugs können in vorteilhafter Weise miteinander und mit der beanspruchten Sicherungstechnik kombiniert werden. Hierbei kann eine Kombination von einigen oder allen Erfindungsaspekten vorliegen. Ferner können die besagten eigenständigen Erfindungsaspekte auch mit anderen hydraulischen Hubstützen kombiniert werden, die eine ausfahrbare und zur eigenen Abstützung an einem Untergrund ausgebildete Stützeinheit mit einem hydraulischen Aktor und einer zugeordneten eigenen hydraulischen Versorgungseinheit aufweisen. Ferner ist eine Kombination mit anderen dezentralen hydraulischen Hubstützenanordnungen möglich, die eine solche vorgenannte hydraulische Hubstütze beinhalten. Schließlich ist auch eine Kombination mit anderen Fahrzeugen und deren Fahrgestellen sowie anderen Einbausituationen möglich.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: ein motorisiertes Straßenfahrzeug mit einem Fahrgestell und einer dezentralen hydraulischen Hubstützenanordnung in einer schematischen Seitenansicht,
- Figur 2 und 3:: eine perspektivische Ansicht und eine Draufsicht auf ein Fahrgestell mit einer Hubstützenanordnung gemäß Figur 1,
- Figur 4:: eine abgebrochene perspektivische Ansicht einer am Chassis montierten autonomen hydraulischen Hubstütze,
- Figur 5:: eine perspektivische Ansicht einer autonomen hydraulischen Hubstütze,
- Figur 6 und 7:: einen hydraulischen Aktor der Hubstütze von Figur 5 in perspektivischer Ansicht und im Längsschnitt,
- Figur 8:: einen Schemaplan der Hubstützenanordnung mit einer Nivelliereinrichtung und einer Sicherungseinrichtung,
- Figur 9:: ein Bediengerät für die Hubstützenanordnung und
- Figur 10:: einen Schemaplan der Hubstützenanordnung und der Sicherungseinrichtung.

Die Erfindung betrifft eine Hubstützenanordnung (3) mit einer Sicherungseinrichtung (73) und einem Verfahren zum sicheren Betrieb der Hubstützenanordnung (3).

Die Erfindung betrifft auch die Sicherungseinrichtung (73) und das Verfahren an sich. Diese können eigenständige Bau- und Funktionseinheiten sein, insbesondere in Form von Software- und/oder Hardwaremodulen. Sie können an einer bestehenden Hubstützenanordnung (3) nachgerüstet oder umgerüstet werden. Sie können auch integraler Bestandteil und Erstausrüstung einer Hubstützenanordnung (3) sein. Sie können insbesondere in eine Steuereinrichtung (57) der Hubstützenanordnung (3) implementiert oder in anderer Weise, z.B. durch Zuschalten eines Hardwaremoduls, der Steuereinrichtung (57) zugeordnet sein.

Die Hubstützenanordnung (3) ist für ein motorisiertes Straßenfahrzeug (1) vorgesehen und ausgebildet. Sie kann in beliebiger Weise ausgebildet sein. In den gezeigten Ausführungsbeispielen ist sie als dezentrale und hydraulische Hubstützenanordnung (3) mit autonomen hydraulischen Hubstützen (4,7) ausgebildet. Alternativ kann sie z.B. als zentrale hydraulische Hubstützenanordnung (3) oder als mechanische bzw. motorische Hubstützenanordnung gestaltet sein.

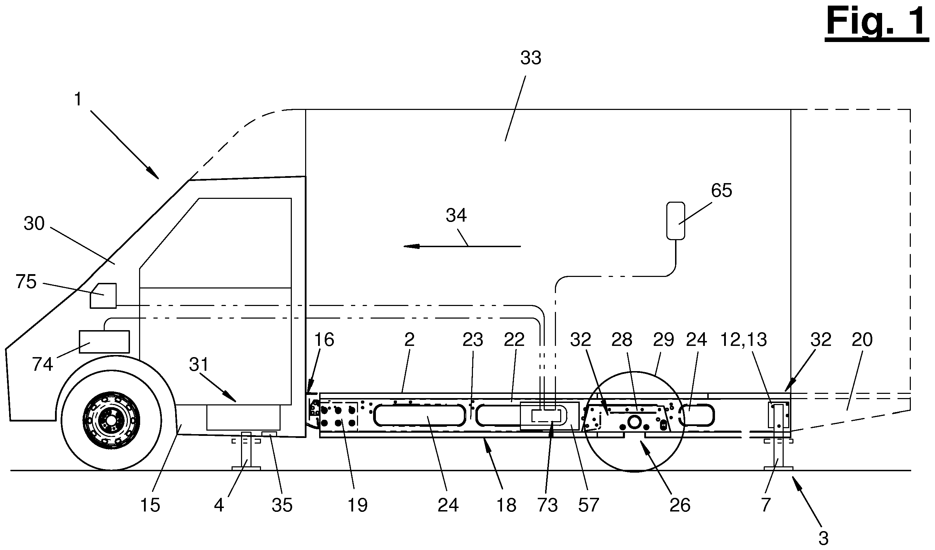

Figur 1 zeigt schematisch ein motorisiertes Fahrzeug (1) mit einem Fahrgestell (2) und einer dezentralen hydraulischen Hubstützenanordnung (3). Die Hubstützen (4,7) sind in ausgefahrener Stellung mit Volllinien und gestrichelt in eingefahrener oder angehobener Stellung dargestellt.

Das Fahrzeug (1) ist z.B. ein Straßenfahrzeug und weist einen vorzugsweise frontseitig angeordneten Fahrantrieb mit einem Motor nebst Getriebe und einer angetriebenen, vorzugsweise vorderen Achse auf. Das Straßenfahrzeug (1) besitzt einen Aufbau (33) und eine frontseitige Fahrerkabine (30), die in den Aufbau (33) integriert oder separat angeordnet sein kann. An der Fahrerkabine (30) befindet sich eine Einstiegstelle (31). Hier kann eine Trittstufe angeordnet sein. Die vorbezeichneten Richtungsangaben für vorne und hinten beziehen sich jeweils auf die durch Pfeil (34) angegebene Fahrtrichtung bzw. Fahrzeuglängsachse.

Das Straßenfahrzeug (1) weist einen Geber (74) für ein Startsignal, z.B. ein Zündungssignal, des Fahrzeugs bzw. Motors auf. Ferner kann eine Fahrzeugsteuerung (nicht dargestellt) vorhanden sein. Der Geber (74) und/oder die Fahrzeugsteuerung können mit der Sicherungseinrichtung (73) signaltechnisch sowie uni- oder bidirektional verbunden sein.

Ferner können nicht dargestellte Sensoren für den Betriebszustand des Straßenfahrzeugs (1) vorhanden und mit der Sicherungseinrichtung (73) signaltechnisch verbunden sein. Dies können z.B. Sensoren für die Handbremse, die Fahrersitzbelegung, die Kupplung, eine Getriebegang-Erkennung oder dgl. sein.

Im Straßenfahrzeug (1), insbesondere in der Fahrerkabine (30), kann eine Warneinrichtung (75) angeordnet sein. Diese kann auf beliebige Weise ein wahrnehmbares Warnsignal im Straßenfahrzeug (1) emittieren, z.B. akustisch und/oder optisch und/oder haptisch. Die Warneinrichtung (75) kann ein separates und ggf. zum Umfang der Sicherungseinrichtung (73) gehörendes Teil oder ein Fahrzeugbestandteil, z.B. ein Display im Armaturenbrett sein.

Das Fahrgestell (2), dass auch als Chassis bezeichnet wird, kann als ein einheitliches und über die Fahrzeuglänge durchgehendes Fahrgestell ausgebildet sein. In der gezeigten und bevorzugten Anordnung ist das Fahrgestell (2) unterteilt. Es kann aus einem frontseitigen Zugkopf (15) mit einem eigenen Zugkopfchassis (16) und aus einem Anbauchassis (18) bestehen, die ggf. von unterschiedlichen Herstellern stammen. Das Zugkopfchassis (15) weist den Fahrantrieb mit Motor und Getriebe, eine Lenkeinrichtung und eine frontgetriebene Vorderachse auf. Das Zugkopfchassis (16) kann mit dem Anbauchassis (18) über einen Adapter (19) verbunden sein, der ggf. einen Höhenunterschied gegenüber dem bevorzugt tiefer gelegten Anbauchassis (18) ausgleicht. Das Anbauchassis (18) weist eine hintere Achsanordnung (26) auf, die in der gezeigten Ausführungsform nicht angetrieben ist und als Schleppachse ausgebildet ist. Alternativ kann das Straßenfahrzeug (1) einen Heckantrieb mit einer angetriebenen hinteren Achsanordnung aufweisen. Hierfür eignet sich z.B. ein über die Fahrzeuglänge durchgehendes Fahrgestell.

Die Achsanordnung (26) kann eine oder mehrere Achsen aufweisen. Das Straßenfahrzeug (1) weist außerdem eine Betriebs- und Feststellbremse auf.

Das Fahrgestell (2) kann sich in mehrere Fahrgestellteile (16,20,22) unterteilen. Dies können z.B. das frontseitige Zugkopfchassis (16) und das Anbauchassis (18) oder bei einer einteiligen Chassisausführung der vordere Fahrgestellteil (16) sowie ein hinterer Chassisbereich sein. Das Anbauchassis (18) und der hintere Chassisbereich weisen jeweils eine Achsanordnung (26) auf.

Die Längsträger (22) können durch ein oder mehrere Querträger (25) quer verbunden sein. Hierdurch kann ein Trägerrahmen, insbesondere ein Leiterrahmen, gebildet werden. Die Längs- und Querträger (22,25) können z.B. aus Stahl oder einer Leichtmetalllegierung bestehen.

Das Fahrgestell (2) weist eine dezentrale hydraulische Hubstützenanordnung (3) auf, mit der das Fahrgestell (2) und das Fahrzeug (1) im Stand abgestützt und ggf. angehoben werden können, wobei die Räder (29) und die Achsen bzw. deren Federungen entlastet werden können. Die Hubstützenanordnung (3) kann mehrere autonome hydraulische Hubstützen (4,7) aufweisen.

Die hydraulischen Hubstützen (4,7) weisen jeweils eine ausfahrbare und zur eigenen Abstützung an einem Untergrund ausgebildete Stützeinheit (9) mit einem hydraulischen Aktor (36) und einer zugeordneten eigenen hydraulischen Versorgungseinheit (37) auf, die als separate und mit gegenseitiger Distanz am Straßenfahrzeug (1) eigenständig montierbare Einheiten ausgestaltet sind. Der hydraulische Aktor (36) und die hydraulische Versorgungseinheit (37) sind durch schlauchförmige und flexible hydraulische Leitungen (53) miteinander verbunden. Hierdurch wird ein geschlossener Hydraulikkreis gebildet. Am freien Ende der Stützeinheit (9) bzw. des hydraulischen Aktors (36) ist ein Stützteller (10) angeordnet.

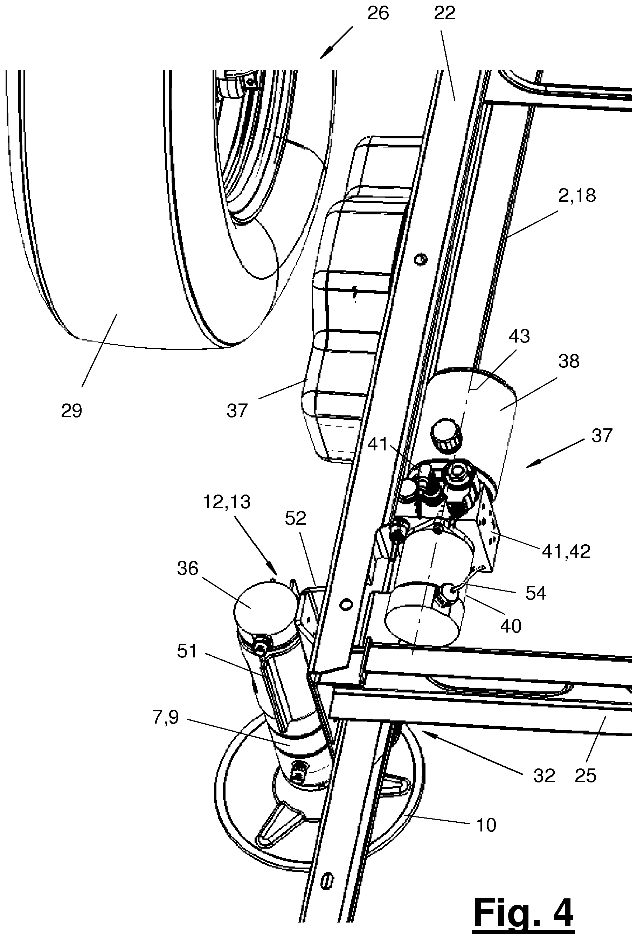

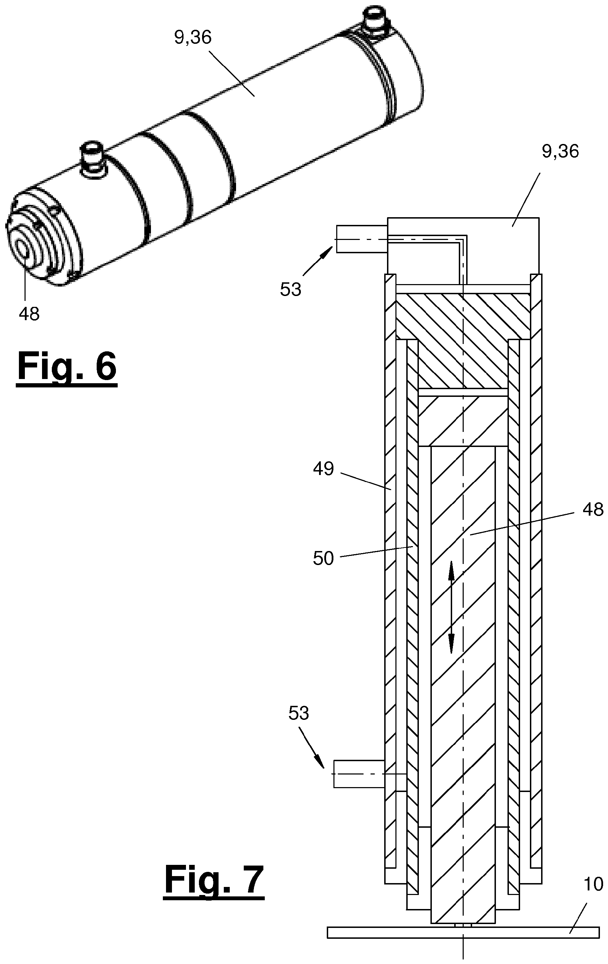

Figur 4 bis 7 verdeutlichen eine bevorzugte Ausführungsform des hydraulischen Aktors (36). Dieser ist als mehrstufig teleskopierbarer und beidseitig beaufschlagbarer hydraulischer Zylinder ausgebildet. Der Zylinder weist eine innere zentrale Kolbenstange (48) auf, die axial ein- und ausfahren kann und die mit ihrem Kolben in einem umgebenden Innenrohr (50) angeordnet ist. Das Innenrohr (50) wird seinerseits konzentrisch von einem relativ ortsfesten Außenrohr (49) umschlossen. Das Innenrohr (50) weist am oberen Ende einen Kolben auf. Am Außenrohr (49) sind mit axialer Distanz Leitungsanschlüsse angeordnet. Am freien Ende der Kolbenstange (48) ist der Stützteller (10) angeordnet.

Die Kolbenstange (48) und das Innenrohr (50) können ein- und ausfahren, vorzugsweise mit einer vorgegebenen Reihenfolge. Im Innenrohr (50) werden beidseits des Kolbens der Kolbenstange (48) hydraulische Arbeitsräume gebildet. Der Kolben ist beidseitig hydraulisch beaufschlagbar, wobei der obere Arbeitsraum mit dem oberen Leitungsanschluss am Außenrohr (48) und der untere Arbeitsraum mit dem unteren Leitungsanschluss am Außenrohr (48) verbunden ist. Zwischen dem Innenrohr (50) mit seinem Kolben und dem Außenrohr (49) werden ebenfalls obere und untere hydraulische Arbeitsräume gebildet, die zur beidseitigen Kolbenbeaufschlagung mit dem oberen und unteren Leitungsanschluss am Außenrohr (49) verbunden sind.

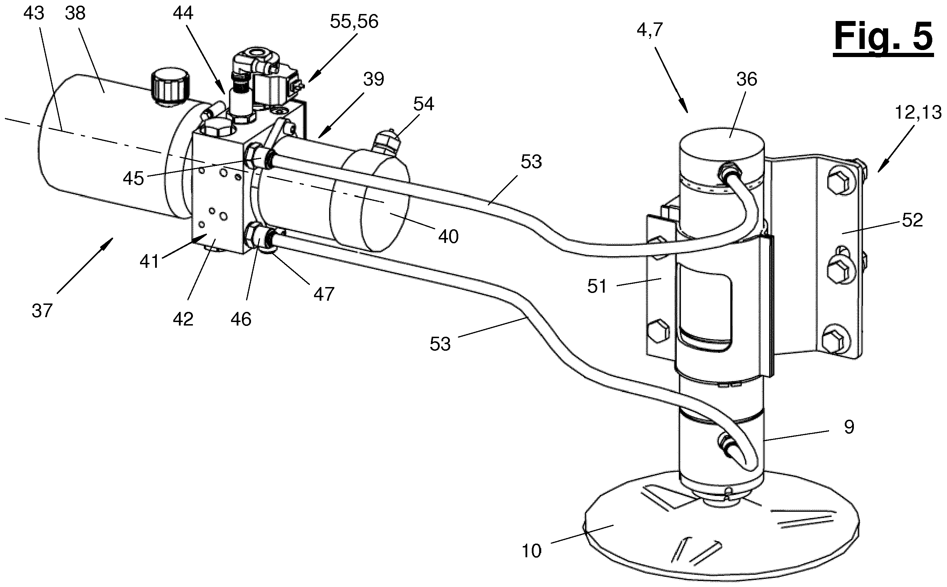

Die hydraulische Versorgungseinheit (37) ist in Figur 4 und 5 dargestellt. Sie weist eine Pumpenanordnung (39), einen geschlossenen Tank (38) mit Hydraulikflüssigkeit, vorzugsweise mit einer Lifetime-Füllung, eine Steueranordnung (41) und Leitungsanschlüsse (45,46) für die besagten hydraulischen schlauchartigen Leitungen (53) auf. Die hydraulische Versorgungseinheit (37) hat eine schlanke längliche Form. Die Pumpenanordnung (39), der Tank (38) und die Steueranordnung (41) sind dabei in einer Reihe hintereinander entlang einer Längsachse (43) der Versorgungseinheit (37) angeordnet.

Die Pumpenanordnung (39) weist einen ebenfalls axial ausgerichteten Pumpenantrieb (40) und eine Pumpeneinheit auf, die bevorzugt mit der Steueranordnung (41) in einem gemeinsamen, bevorzugt quaderförmigen Gehäuse (42) angeordnet ist. Der Pumpenantrieb (40) ist vorzugsweise als Elektromotor, z.B. als Gleichstrommotor mit Niederspannung von z.B. 12 Volt ausgebildet.

Die hydraulische Versorgungseinheit (37), insbesondere die elektrisch angetriebene Pumpenanordnung (39), weist einen Stromanschluss für eine stromzuführende Leitung (54) und einen mit dem bevorzugt metallischen Fahrgestell (2) leitend verbindbaren Masseanschluss auf. Die stromzuführende Leitung (54) kann ohne Masseleiter auskommen und kann 1-polig ausgebildet sein.

Die Pumpenanordnung (39) kann beidseitig fördernd ausgebildet sein. Dies kann durch eine beidseitig fördernde Pumpe oder durch eine einseitig fördernde Pumpe in Verbindung mit einem Umschaltventil, z.B. einem 2/4-Wegeventil, erreicht werden. Durch die beidseitige Beaufschlagung des Zylinders bzw. seiner Kolben und den geschlossenen Hydraulikkreis kann die Hubstütze (4,7) aktiv und gesteuert einfahren und ausfahren. Der Tank (38) und der Hydraulikkreis sind bei eingefahrenem Zylinder vollständig mit Hydraulikflüssigkeit gefüllt. Durch den geschlossenen hydraulischen Kreis können die Ein- und Ausfahrbewegungen der hydraulischen Hubstütze (4,7) bzw. ihres hydraulischen Aktors (36) direkt über den Pumpenantrieb (40) gesteuert werden.

Die Steueranordnung (41) ist z.B. als steuerbare Ventilanordnung, insbesondere als steuerbares Mehrwegeventil, ausgebildet und im Gehäuse (42) angeordnet. Sie kann auch Blockademittel für die Zylinderbewegung, z.B. Rückschlagventile im Hydraulikkreis, sowie Drosseln und ggf. einen Druckbegrenzer aufweisen. Die Ventilanordnung kann mit einer Feder oder dgl. beschaltet sein. Sie sperrt automatisch den Hydraulikfluss in Einfahrrichtung und ggf. Ausfahrrichtung des Aktors (36) und öffnet erst auf ein Steuersignal.

In Abwandlung der Ausführungsform kann eine drehrichtungsgebundene hydraulische Pumpenanordnung (39) eingesetzt werden. Bei falschem Pumpenanschluss wird keine Hydraulikflüssigkeit gefördert und eine Fehlfunktion der Hubstütze vermieden.

Die Leitungsanschlüsse (45,46) sind am Gehäuse (42) angeordnet. Sie sind gemeinsam an einer Stirnseite der Steueranordnung (41) bzw. des Gehäuses (42) angeordnet und sind dabei entlang der Längsachse (43) ausgerichtet. Die Leitungsanschlüsse (45,46) können drehbare Leitungskupplungen für den Anschluss der Hydraulikleitungen (53) aufweisen. Die Hydraulikleitungen (53) können gerade oder über Kreuz geführt sein.

Die hydraulische Versorgungseinheit (37) wird bevorzugt mit liegender Ausrichtung am Fahrgestell (2) montiert.

Die hydraulische Hubstütze (4,7) kann einen Sensor (44) zur Detektion eines Bodenkontakts beim Ausfahren aufweisen. Der gleiche oder ein anderer Sensor (44) kann und zur Detektion eines Endanschlags in der Einfahrstellung der Hubstütze (4,7) benutzt werden.

Der Sensor (44) kann in beliebig geeigneter Weise ausgebildet sein. Er kann einzeln oder mehrfach vorhanden sein. In der gezeigten Ausführungsform ist er als Drucksensor ausgebildet und im geschlossenen Hydraulikkreis der hydraulischen Hubstütze (4,7) angeordnet. Der Drucksensor (44) ist z.B. an der hydraulischen Auslassseite der Steueranordnung (41) angeordnet. Er kann dabei im Gehäuse (42) in dem zum auslassseitigen Leitungsanschluss (45) führenden Strömungskanal angeordnet sein. Die hydraulische Hubstütze (4,7) weitere und ggf. auch andere Sensoren zur Funktionsüberwachung aufweisen.

Die hydraulische Versorgungseinheit (37) kann einen im Notfall lösbaren Fluidablass (47) im Hydraulikkreis mit Bypass und Tankrückführung aufweisen.

Die hydraulische Hubstütze (4,7) weist einen Träger (12) und einen Montagebeschlag (13) für den hydraulischen Aktor (36) auf. Diese sind dazu ausgebildet, den hydraulischen Aktor (36) starr aufzunehmen und relativ ortsfest am Straßenfahrzeug (1), insbesondere am Fahrgestell (2) zu fixieren. Die Hubstütze (4,7) führt nur eine lineare und axiale Einfahr- und Ausfahrbewegung aus. Der Träger (12) und der Montagebeschlag (13) sind lösbar miteinander verbunden.

In den verschiedenen Varianten nehmen der Träger (12) allein oder im Zusammenwirken mit dem Montagebeschlag (13) den hydraulischen Aktor (36) mit seinem z.B. zylindrischen Gehäuse formschlüssig auf, wobei eine Führung und Sicherung bestehen, die eine Verdrehung und eine axiale Verschiebung des Aktorgehäuses verhindern.

Die dezentrale hydraulische Hubstützenanordnung (3) weist mehrere, insbesondere vier, hydraulische und autonome Hubstützen (4,7) mit einer gemeinsamen Steuereinrichtung (57) auf. Die Hubstützen (4,7) können jeweils einen hydraulischen Aktor (36) und eine zugeordnete eigene hydraulische Versorgungseinheit (37) aufweisen, die in der vorbeschriebenen Weise getrennt voneinander angeordnet und durch schlauchförmige hydraulische Leitungen (53) miteinander verbunden sind. In einer anderen Variante können sie gemeinsam in einem Gehäuse angeordnet sein.

Die Steuereinrichtung (57) weist eine integrierte elektrische Leistungs-Endstufe (61) für die Stromversorgung der elektrischen Pumpenantriebe (40) der hydraulischen autonomen Hubstützen (4,7) auf. Die Steuereinrichtung (57) ist an die elektrische Energieversorgung (64), z.B. eine Batterie oder einen Akku, angeschlossen. Dies kann die bordeigene Energieversorgung (64) des Straßenfahrzeugs (1) oder eine andere und z.B. der Hubstützenanordnung (3) zugeordnete Energieversorgung sein.

Die Steuereinrichtung (57) versorgt über die Endstufe (61) die Hubstützen (4,7), insbesondere deren jeweiligen elektrischen Pumpenantrieb (40), einzeln und individuell mit Strom. Die Steuereinrichtung (57) kann die Hubstützen (4,7) einzeln und individuell unter Prüfung ihres Bodenkontakts steuern. Die Steuereinrichtung (57) kann ferner individuell die an die elektrischen Pumpenantriebe (40) abgegebenen Ströme erfassen. Sie kann auch mittels der Stromerfassung die Endlagen der hydraulischen Hubstützen (4,7), bzw. ihrer hydraulischen Aktoren (36) detektieren.

Die Leistungs-Endstufe ist bevorzugt als Halbleiter-Endstufe ausgeführt. Die Steuereinrichtung (57) weist ferner eine Steuereinheit (60), insbesondere eine Steuerelektronik mit ein oder mehreren Mikroprozessoren, Datenspeichern und Steuersoftware auf. Die Leistungs-Endstufe (61) und die bevorzugt programmierbare Steuereinheit (60) können gemeinsam auf einer einzelnen Steuerplatine (59) angeordnet sein. Die besagte Stromerfassung kann von der Steuereinheit (60) und/oder der halbleitergesteuerten Leistungs-Endstufe (61) mit geeigneten Mitteln durchgeführt werden. Ferner kann eine Diagnose-Software vorhanden sein.

Die Steuereinrichtung (57) ist mit den einen Bodenkontakt oder einen Einfahr-Endanschlag detektierenden Sensoren (44), insbesondere den Drucksensoren, der Hubstützen (4,7) signaltechnisch verbunden. Die Steuereinrichtung (57) steuert die hydraulischen Hubstützen (4,7) jeweils einzeln und in Abhängigkeit vom Sensorsignal des Sensors (44) und vom detektierten Motorstrom des jeweiligen elektrischen Pumpenantriebs (40). Die Erfassung der Motorströme kann auf beliebig geeignete Weise, z.B. an der Leistungs-Endstufe (61) oder an der Steuereinheit bzw. Steuerelektronik (60) erfolgen.

Generell kann die Steuereinrichtung (57) mit Drucksensoren in einem Hydraulikkreis der Hubstützen (4,7) signaltechnisch verbunden sein und kann die mit Bodenkontakt ausgefahrenen sowie nivellierten hydraulischen Hubstützen (4,7) auf ein untereinander abgestimmtes hydraulisches Druckverhältnis einstellen, insbesondere steuern oder regeln. Dies kann z.B. während oder nach der Nivellierung erfolgen. Das Nivellieren kann automatisch oder manuell erfolgen. Dabei kann eine horizontale Fahrzeuglage und/oder eine bewusste Schräglage bzw. Fahrzeugneigung, z.B. eine Schlafneigung, eingestellt werden.

Das gesteuerte Druckverhältnis kann z.B. das Erreichen und ggf. Überschreiten eines vorgegebenen Mindestwerts des hydraulischen Drucks betreffen. Damit kann ein Bodenkontakt und eine Mindestbelastung aller Hubstützen (4,7) detektiert und eingestellt werden. In einer anderen Variante kann auf gleichen hydraulischen Druck gesteuert bzw. geregelt werden. Alternativ können andere abgestimmte Druckverhältnisse eingestellt werden.

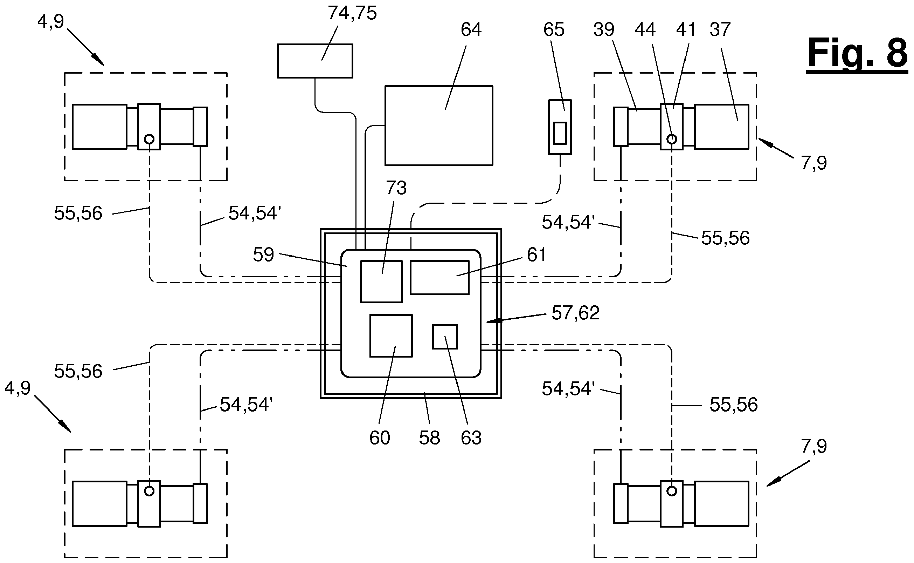

Die Steuereinrichtung (57) kann eine integrierte Nivelliereinrichtung (62) zur Einstellung der gewünschten Lage und Neigung des Fahrgestells (2) aufweisen. Die Nivelliereinrichtung (62) beinhaltet eine in Figur 8 angedeutete Erfassungseinrichtung (63) für die Fahrzeuglage, insbesondere die Fahrgestellneigung. Dies kann eine horizontale Ausrichtung und ggf. eine andere gewünschte Fahrzeugneigung, z.B. eine Schlafneigung betreffen. Eine solche Fahrzeugneigung kann voreingestellt und ggf. verändert werden, z.B. durch herstellerseitige oder bedienerseitige Programmierung und Speicherung.

Die Erfassungseinrichtung (63) kann in beliebig geeigneter Weise ausgebildet sein, z.B. als elektrische Libelle oder als andere Anordnung von elektrischen Neigungssensoren, insbesondere Beschleunigungssensoren. Die Verarbeitung der Erfassungs- und Neigungssignale kann in einer eigenständigen Steuereinheit der Nivelliereinrichtung (62) oder in der Steuereinheit (60) bzw. Steuerelektronik der Steuereinrichtung (57) erfolgen. Die Erfassungseinrichtung (63) ist vorzugsweise ebenfalls auf der gemeinsamen Steuerplatine (59) angeordnet. Sie kann sich alternativ an anderer Stelle befinden.

Die Steuereinrichtung (57) ist schematisch in Figur 8 dargestellt. Die Steuereinheit (60) ist über Leitungen (55) mit den Steuerungsanordnungen (41) und über Leitungen (56) mit den Sensoren (44) der hydraulischen Hubstützen (4,7) verbunden. Die Leitungen (55,56) können Steuerleitungen bzw. Signalleitungen sein. Die Endstufe (61) ist über die Stromleitungen (54) mit den Pumpenantrieben (40) verbunden.

Die Steuereinrichtung (57), insbesondere ihre Steuereinheit (60), ist mit ein oder mehreren externen Bediengeräten (65) per Kabel oder drahtlos verbunden. Hierfür weisen das Bediengerät (65) und die Steuereinheit (60) entsprechende Kommunikationseinheiten mit Sende- und Empfangsteil auf. Eine drahtlose Kommunikation kann z.B. per Funk erfolgen.

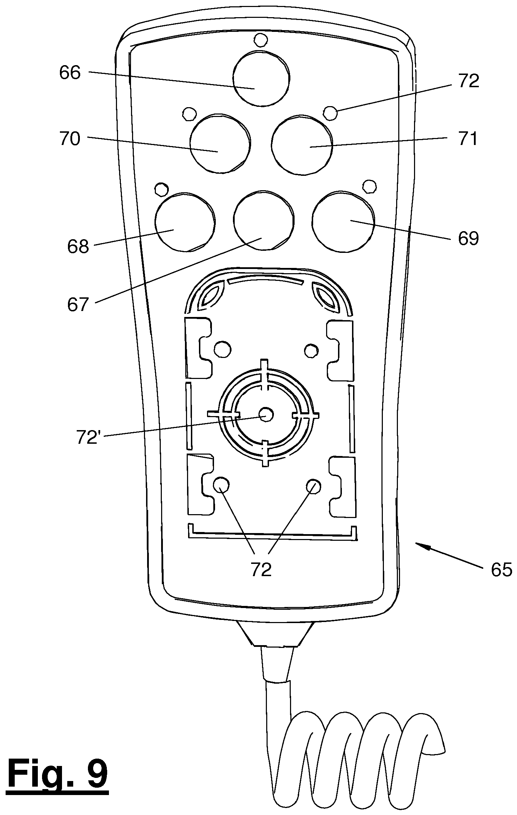

Das in Figur 9 dargestellte Bediengerät (65) kann stationär am Straßenfahrzeug (1) oder mobil angeordnet sein. Es kann z.B. eine Fernbedienung mit Kabel oder mit drahtloser Kommunikation darstellen. Das Bediengerät (65) weist mehrere Eingabeelemente (67,68,69) für eine wahlweise manuelle Bedienung oder eine automatische Nivellierung oder ein automatisches Einfahren der Hubstützen auf. Mit dem Eingabeelement (68) werden die Hubstützen (4,7) automatisch ausgefahren und eine automatische Nivellierung durchgeführt. Das Eingabeelement (69) bewirkt ein automatisches Einfahren der Hubstützen (4,7) bis Erreichen des Endanschlags. Eine Umschaltung auf manuellen Betrieb erfolgt über das Eingabeelement (67). Bei manueller Bedienung können mit den Bedienelementen (68,69) die Hubstützen (4,7) ein- und ausgefahren werden. Ferner kann ein Eingabeelement (66) für das Ein- und Ausschalten des Bediengeräts (65) sowie ggf. für einen Nothalt vorhanden sein.

Mit Eingabeelementen (70,71) können ein oder oder mehrere Sonderpositionen, vorzugsweise Neigungen, des Straßenfahrzeugs (1), insbesondere des Fahrgestells (2), angewählt werden. Diese Sonderpositionen können vorprogrammiert oder vom Nutzer eingelernt und gespeichert werden. Sonderpositionen können unterschiedliche Neigungen für eine besonders gute Schlafstellung oder für eine Tankentleerung oder für andere Zwecke, z.B. zur Neigungsanpassung für eine heckseitige Auffahrrampe, sein.

Das Bediengerät (65) kann ferner eine oder mehrere Anzeigen (72) aufweisen, die optisch, akustisch, haptisch oder in anderer Weise signalisieren. Sie können Quittungssignale bei der Betätigung von Eingabeelementen (66-71) ausgeben und/oder in einer Schemadarstellung des Fahrgestells die beaufschlagten Hubstütze(n) (4,7) anzeigen. Eine zentrale Anzeige (72') kann die Nivelliermöglichkeit, den Nivellierbetrieb und eine erfolgreiche Nivellierung, insbesondere in Horizontallage, signailisieren. Ferner können Warn- und Zustandmeldungen sowie Fehlerdiagnosen angezeigt werden. Komplexere Informationen können auf andere, nicht dargestellte Weise, z.B. über ein Display, dem Bediener mitgeteilt werden.

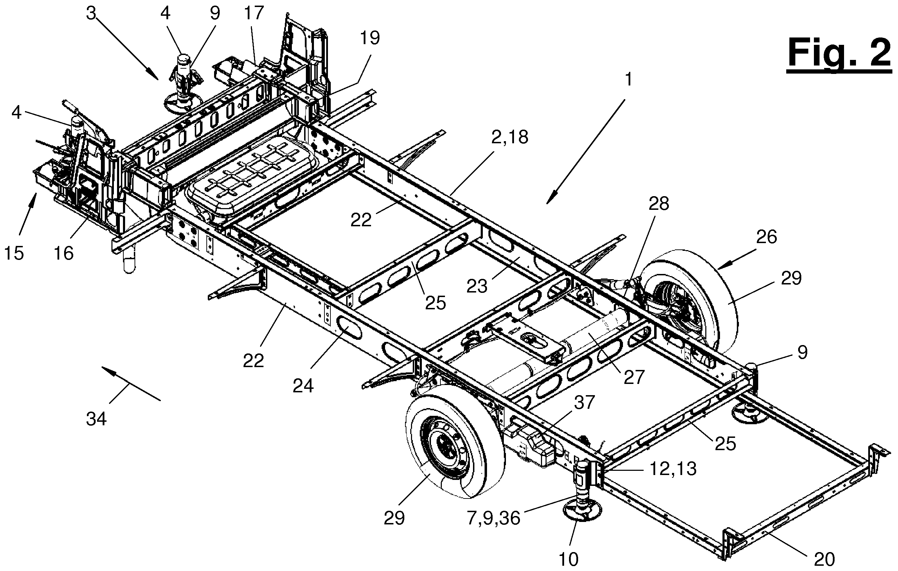

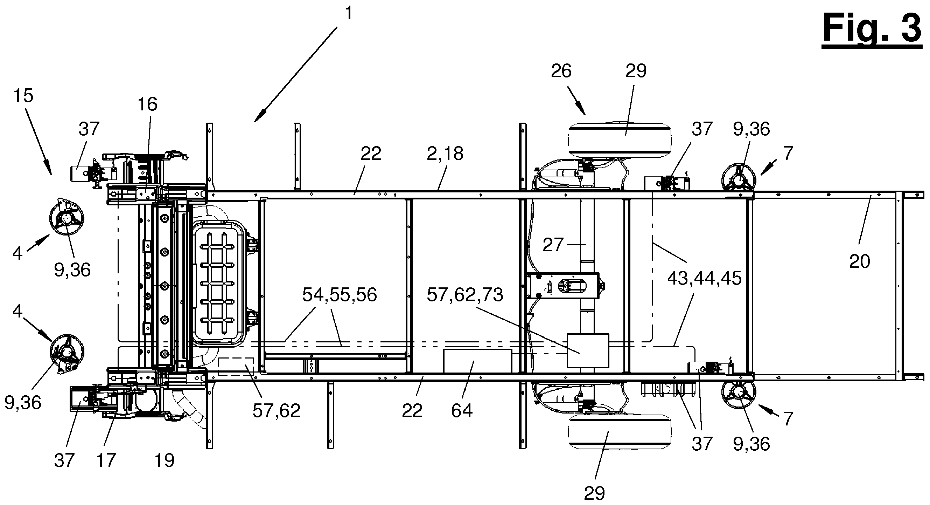

In Figur 1 bis 4 sind Ausführungsbeispiele mit Anbaumöglichkeiten für Hubstützen (4,7) als beispielhafter Überblick dargestellt. Die Hubstützen (4,7) sind vorzugsweise in Fahrtrichtung (34) beidseits am Fahrgestell (2) angeordnet und bilden ein Hubstützenpaar. Vorzugsweise weist die Hubstützenanordnung (3) zwei solcher Paare auf, die im Front- und Heckbereich des Fahrgestells (2) angeordnet sind. Die Zahl der Paare kann alternativ größer sein.

Die Hubstützenanordnung (3) weist die besagte Sicherungstechnik, d.h. die Sicherungseinrichtung (73) und das sichere Betriebsverfahren, für die sichere Funktion der Hubstützen (4,7) auf. Die Sicherungseinrichtung (73) ist in Figur 1, 3, 8 und 10 schematisch dargestellt. Sie kann die Hubstützen (4,7) direkt oder mittelbar über die Steuereinrichtung (57) und deren Steuerplatine (59) sowie Steuerelektronik (60) ansteuern und betätigen.

Die Sicherungseinrichtung (73) kann als Steuermodul ausgebildet sein. Dies kann ein Software- und/oder Hardwaremodul sein, das der Steuereinrichtung (57) in geeigneter Weise zugeordnet ist. Das Steuermodul kann auf der Steuerplatine (60) angeordnet sein. Es kann eine eigene Steuerhardware aufweisen oder die platinenseitig vorhandene Hardware, insbesondere die Steuerelektronik (60), nutzen oder erweitern.

Die Hubstützen (4,7) weisen jeweils die besagte Stützeinheit (9) mit dem Aktor (36) auf, der einen Antrieb (40) und eine Steueranordnung (41) beinhaltet. In Abwandlung der gezeigten Ausführungsbeispiele kann eine Hubstütze (4,7) als Schwenkfuß oder Schwenkstütze oder in anderer Weise ausgebildet sein. Der Aktor kann z.B. als motorisierter Spindeltrieb, Zahnstangentrieb oder dergleichen ausgebildet sein und einen Antrieb (40) in Form eines Elektromotors sowie eine Steuerantordnung (41) in Form eines schaltbaren Getriebes, insbesondere Planetengetriebes, aufweisen. Durch die getrennt schaltbare Steueranordnung (41) kann in Funktionsübereinstimmung mit der hydraulischen Hubstütze der Kraftfluss für die Betätigung des Stützelements (10) eingeschaltet oder ausgeschaltet werden.

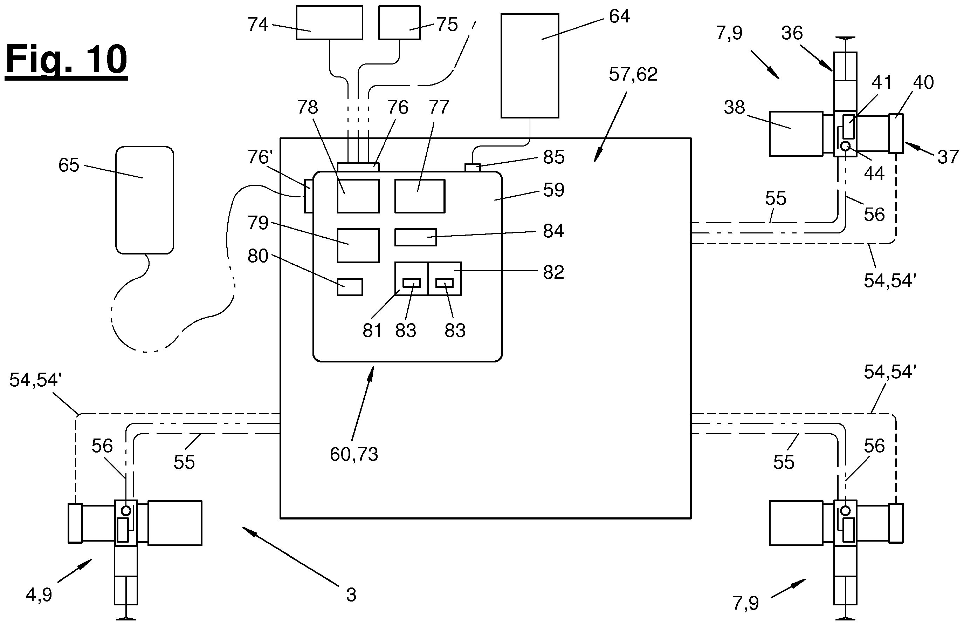

Dies kann ein Sicherheitsaspekt sein, wobei nur bei korrekter Ansteuerung bzw. Beschaltung von Antrieb (40) und Steueranordnung (41) eine Hubstützenbetätigung mit Einfahren oder Ausfahren möglich ist. In Figur 10 sind nicht alle Hubstützen (4,7) dargestellt.

Die Sicherungseinrichtung (73) weist in der gezeigten Ausführungsform von Figur 10 eine Schnittstelle (76) zur signaltechnischen Verbindung mit dem erwähnten Geber (74) für ein Startsignal des Straßenfahrzeugs (1) und mit einer Warneinrichtung (75) auf. Ferner ist eine ggf. zusätzliche Schnittstelle (76') für die signaltechnische Verbindung mit einem Bediengerät (65) vorgesehen. Über diese oder eine andere Schnittstelle kann auch eine signaltechnische Verbindung mit einer Fahrzeugsteuerung hergestellt werden. Die signaltechnische Verbindung kann unidirektional oder bidrektional sein. Sie kann leitungsgebunden oder drahtlos sein. Über die signaltechnische Verbindung können Zustands- oder Meldesignale, Steuersignale oder dergleichen übertragen werden.

Die gezeigte Sicherungseinrichtung (73) weist eine Prüfeinrichtung (77) für den aktuellen Betriebszustand des Straßenfahrzeugs (1), ein Weckmodul (78), ein Prüfmodul (79) für die Hubstützenlage, ein Plausibilitätsmodul (80) für Bedienungssignale, mehrere, bevorzugt zwei, Controller (81,82) mit jeweils einer Controllerüberwachung (83) und ein Nachsetzmodul (84) sowie einen Anschluss (85) für die Energieversorgung (64) auf. Diese Komponenten sind vorzugsweise in vollständiger Kombination vorhanden. Alternativ können eine oder mehrere einzelne Komponenten entfallen, z.B. die Prüfeinrichtung (77) und das Weckmodul (78) .

Das Weckmodul (78) dient zum Aufwecken der Sicherungseinrichtung (73) und ggf. der Steuereinrichtung (57). Das Weckmodul (78) kann durch ein Startsignal des Gebers (74) und/oder ein Bediensignal eines Bediengeräts (65) angesteuert werden.

Die Sicherungseinrichtung (73) und die Steuereinrichtung (57) können grundsätzlich über ein Bediengerät (65) und eine eindeutige Betätigung seines Eingabeelements (66) eingeschaltet und auch ausgeschaltet werden. Wenn im Einschaltzustand längere Zeit kein Bedienungssignal anliegt, kann in den Standby-Modus gewechselt werden, aus dem z.B. ein Aufwecken erfolgt, wenn das besagte Startsignal des Gebers (74) anliegt.

Das Prüfmodul (79) fragt die aktuelle Hubstützenstellung direkt oder über die Programmsteuerung der Steuereinrichtung (57) ab und stellt fest, ob die Hubstützen (4,7) eingefahren oder ausgefahren sind und ob sie ggf. Bodenkontakt haben.

Die Prüfeinrichtung (77) detektiert den Betriebszustand des Straßenfahrzeugs (1). Sie kann bei Anliegen eines Startsignals vom Geber (74) abgefragt werden. Die Prüfeinrichtung (77) ist z.B. per Datenbus mit einer Fahrzeugsteuerung verbunden. Sie kann alternativ oder zusätzlich mit Sensoren im Straßenfahrzeug (1) verbunden sein, die für eine Wegfahrbereitschaft relevante Fahrzeugkomponenten detektieren. Solche Sensoren können z.B. die Handbremsstellung, die Belegung des Fahrersitzes und evtl. weiterer Sitze, die Kupplungsbetätigung, das Einlegen eines Fahrgangs am Fahrzeuggetriebe oder dgl. erfassen.

Das Startsignal wird z.B. in der vorerwähnten Weise beim Einschalten der Zündung des Straßenfahrzeugs (1) emittiert. Über die vorgenannten Sensoren und die Prüfeinrichtung kann detektiert werden, ob beim Einschalten der Zündung der Fahrersitz belegt, die Handbremse gelöst und die Kupplung betätigt bzw. ein Fahrgang eingelegt ist. Wenn diese Kriterien erfüllt sind, ist davon auszugehen, dass mit dem Einschalten der Zündung und dem Starten des Motors auch ein Losfahren des Fahrzeugs beabsichtigt ist. Sind hingegen die Handbremse angezogen, der Fahrersitz nicht belegt und auch kein Fahrgang eingelegt, spricht dies für ein Einschalten der Zündung zu anderen Zwecken und gegen eine Wegfahrabsicht des Bedieners. Andere Kombinationen der Detektionsergebnisse können ebenfalls und mit angepasster Logik bewertet werden.

Die Sicherungseinrichtung (73), insbesondere die Prüfeinrichtung (77), führt anhand einer Auswertung der besagten Bus- oder Sensorsignale eine Bewertung des vom Geber (74) empfangenen Startsignals auf dessen vorhandene (positive) oder fehlende (negative) sicherheitstechnische Relevanz aus.

Wenn die Sicherungseinrichtung (73) über das Prüfmodul (79) eine ausgefahrene Hubstützenstellung erkennt und ein positiv bewertetes Startsignal im Sinne einer detektierten Wegfahrbereitschaft erhält, emittiert sie ein Warnsignal über die Warneinrichtung (75), z.B. einen akkustischen Warnton, einen gesprochenen oder optisch angezeigten Warnhinweis, eine warnende Blinkreaktion oder dgl..

Die Sicherungseinrichtung (73) belässt dabei die aktuelle ausgefahrene Hubstellung der Hubstützen (4,7) und die angehobene Fahrzeugstellung. Das mit einem Einfahren der Hubstützen (4,7) und einem Absenken des Straßenfahrzeugs (1) verbundene Unfallrisiko wird höher bewertet als eine Beschädigungsgefahr für die Hubstützenanordnung (3) und das Straßenfahrzeug (1), falls der Bediener die Warnung ignoriert und losfährt.

Der eine Controller (81) dient zur Ansteuerung des Antriebs (40) der jeweiligen Hubstütze (4,7). Der andere Controller (82) ist für die Ansteuerung der Steueranordnung (41) der jeweiligen Hubstütze (4,7) vorgesehen. Beide Controller (82) werden hinsichtlich ihrer sicheren Hardwarefunktion mit einer Controllerüberwachung (83) überprüft. Die Controllerüberwachung (83) kann einen elektronischen Watchdog, eine Strommessung, eine Schwingungskontrolle von elektronischen Schaltelementen etc. beinhalten. Der jeweilige Controller (81,82) kann seine Ansteuerfunktion nur ausüben wenn die Controllerüberwachung (83) eine intakte Hardware detektiert. Die Controller (81,82) können eigene elektronische Schaltelemente oder eigene Softwarefunktionen mit Implementierung in einem gemeinsamen Mikrocontroller sein. Dies kann der Mikrocontroller oder Prozessor bzw. Steuerelektronik (60) der Steuerungseinrichtung (57) sein und kann auf der Platine (59) angeordnet sein.

Das Plausibilitätsmodul (80) überprüft die Qualität des Bedienungssignals. Hierbei kann z.B. die Dauer der Betätigung der Bedienelemente überprüft und auf deren beabsichtigte oder zufällige Betätigung oder auch Fehlfunktion rückgeschlossen werden.

Eine sichere Betätigung mit Einfahren und/oder Ausfahren der Hubstützen (4,7) kann erfolgen, wenn kein Startsignal vom Geber (74) empfangen wird, das Bediensignal plausibel ist und die durch die getrennten Controller (81,82) sowie deren Controllerüberwachungen (83) repräsentierten Sicherungskreise in Ordnung sind. Entsprechendes kann bei einem negativ bewerteten Startsignal erfolgen.

Zur Hubstützenbetätigung können dann in der vorbeschriebenen Weise die Antriebe (40) der Pumpen über die Leitung (54) angesteuert und mit Energie versorgt werden sowie die Steueranordnung (41) bzw. Ventilanordnung über die Leitung (55) beaufschlagt und unter Überwindung der Federvorspannung bestromt werden.

Im Falle einer anderen und z.B. motorisierten Hubstütze wird der motorische Antrieb (40) über eine Steuerleitung (54') angesteuert. Mit der Steuerleitung (55) wird eine z.B. als schaltbares Getriebe, Kupplung oder dgl. ausgebildete Steueranordnung (41) angesteuert. Der Antrieb (40) ist dabei eigenständig an die Energieversorgung (64) angeschlossen. Eine Ansteuerleitung (54') kann auch bei einer zentralen hydraulischen Hubstützenanordnung mit einer zentralen Hydraulikversorgung für die einzelnen Hubstützen benutzt werden.

Das Nachsetzmodul (84) dient zum Nachsetzen mit Kraft- oder Druckbelastung bzw. -einstellung von ein oder mehreren Hubstützen (4,7) nach dem Nivellieren. Die Sicherungseinrichtung (73) detektiert das Funktionsende bzw. Abschalten der Nivelliereinrichtung (62) und führt dann über das Nachsetzmodul (84) eine Überprüfung der verschiedenen Hubstützen (4,7) durch. Hierbei wird z.B. über Abfrage des Sensors (44) festgestellt, ob alle Hubstützen (4,7) ausgefahren sind und Bodenkontakt haben. Ferner wird festgestellt, ob die verschiedenen Hubstützen (4,7) auch eine untereinander gleiche Kraft- oder Druckbelastung haben. Dies kann das Erreichen bzw. Überschreiten eines Mindest-Schwellwerts oder das Erreichen eines oberen Endwerts betreffen. Bei Belastungsunterschieden wird die betreffende und z.B. minderbelastete Hubstütze angesteuert und nachgefahren, bis alle Hubstützen Bodenkontakt haben und auf dem gewünschten Kraft- oder Druckniveau sind.

### BEZUGSZEICHENLISTE

- 1: Fahrzeug, Straßenfahrzeug
- 2: Fahrgestell, Chassis
- 3: Hubstützenanordnung
- 4: Hubstütze an Fahrerkabine
- 5:
- 6:
- 7: Hubstütze an Heckbereich
- 8:
- 9: Stützeinheit
- 10: Stützteller
- 11:
- 12: Träger
- 13: Anbaubeschlag
- 14:
- 15: Zugkopf
- 16: Fahrgestellteil vorn, Zugkopfchassis
- 17: Unterzug
- 18: Anbauchassis
- 19: Adapter
- 20: Fahrgestellteil hinten, Heckteil, Heckverlängerung
- 21:
- 22: Fahrgestellteil, Längsträger
- 23: Trägersteg
- 24: Stegöffnung
- 25: Querträger
- 26: Achsanordnung, Radlenkerachse
- 27: Achskörper, Achsrohr
- 28: Fahrgestellteil, Achsbock
- 29: Rad
- 30: Fahrerkabine
- 31: Einstiegstelle, Stufe
- 32: Verbindungsstelle
- 33: Aufbau
- 34: Fahrtrichtung, Fahrzeuglängsachse
- 35: Wagenheberaufnahme
- 36: Aktor, teleskopierbarer Zylinder
- 37: Versorgungseinheit
- 38: Tank für Hydraulikflüssigkeit
- 39: Pumpenanordnung
- 40: Pumpenantrieb, Motor
- 41: Steueranordnung, Ventilanordnung
- 42: Gehäuse
- 43: Längsachse
- 44: Sensor, Drucksensor
- 45: Leitungsanschluss, Auslass
- 46: Leitungsanschluss, Einlass
- 47: Ablass
- 48: Kolbenstange
- 49: Außenrohr
- 50: Innenrohr
- 51: Aktoraufnahme, Klemmschale
- 52: Montagekonsole
- 53: Leitung für Hydraulikflüssigkeit
- 54: Leitung, Energieversorgung
- 54': Leitung, Steuerleitung zu Stützenantrieb
- 55: Leitung, Steuerleitung zu Steueranordnung
- 56: Leitung, Signalleitung
- 57: Steuereinrichtung
- 58: Gehäuse
- 59: Steuerplatine
- 60: Steuereinheit, Steuerelektronik
- 61: Endstufe
- 62: Nivelliereinrichtung
- 63: Erfassungseinrichtung für Neigung
- 64: Energieversorgung, Akku
- 65: Bediengerät, Fernbedienung
- 66: Eingabeelement, Ein/Aus, Nothalt
- 67: Eingabeelement für manuelle Bedienung
- 68: Eingabeelement für automatische Nivellierung
- 69: Eingabeelement für Stützenbetätigung
- 70: Eingabeelement für Sonderposition
- 71: Eingabeelement für Sonderposition
- 72: Anzeigeelement
- 72': Anzeigeelement
- 73: Sicherungseinrichtung
- 74: Geber für Startsignal Fahrzeug
- 75: Warneinrichtung
- 76: Schnittstelle zu Fahrzeug
- 76': Schnittstelle zu Bediengerät
- 77: Prüfeinrichtung für Fahrzeugzustand
- 78: Weckmodul
- 79: Prüfmodul Hubstützenlage
- 80: Plausibilitätsmodul
- 81: Controller Antrieb
- 82: Controller Steueranordnung
- 83: Controllerüberwachung
- 84: Nachsetzmodul
- 85: Anschluss Energieversorgung

## Patentansprüche

1. Hubstützenanordnung für ein motorisiertes Straßenfahrzeug (1) mit einem Fahrgestell (2), insbesondere für Wohn-, Verkaufs- oder Sondermobile, wobei die Hubstützenanordnung (3) mehrere, insbesondere vier, Hubstützen (4,7) mit einer Steuereinrichtung (57) aufweist, wobei die Hubstützenanordnung (3) eine Sicherungseinrichtung (73) für die sichere Funktion der Hubstützen (4,7) aufweist, **dadurch gekennzeichnet, dass** die Sicherungseinrichtung (73) mindestens eine Schnittstelle (76,76') aufweist, die zur signaltechnischen Verbindung mit einem Geber (74) für ein Startsignal des Straßenfahrzeugs (1) und mit einer Warneinrichtung (75) und mit einem Bediengerät (65) sowie ggf. mit einer Fahrzeugsteuerung vorgesehen und ausgebildet ist, wobei die Sicherungseinrichtung (73) derart gesteuert ist, dass sie bei einem empfangenen Startsignal des Gebers (74) und einer kritischen Hubstützenstellung, insbesondere bei Bodenkontakt, ein Warnsignal über die Warneinrichtung (75) emittiert und die aktuelle Hubstützenstellung belässt.

2. Hubstützenanordnung nach Anspruch 1, **dadurch gekennzeichnet, dass** die Hubstützenanordnung (3) als dezentrale Hubstützenanordnung mit autonomen, insbesondere hydraulischen oder motorischen, Hubstützen (4,7) ausgebildet ist.

3. Hubstützenanordnung nach Anspruch 1 oder 2, **dadurch gekennzeichnet, dass** die Hubstützen (4,7) eine ausfahrbare und zur eigenen Abstützung an einem Untergrund ausgebildete Stützeineinheit (9) mit einem Aktor (36) aufweist, wobei der Aktor (36) einen Antrieb (40) und eine Steueranordnung (41) beinhaltet.

4. Hubstützenanordnung nach einem der vorhergehenden Ansprüche, **dadurch gekennzeichnet, dass** die Sicherungseinrichtung (73) ein Weckmodul (78) zum Aufwecken der Sicherungseinrichtung (73) und ggf. der Steuereinrichtung (57) aufweist, wobei das Weckmodul (78) durch ein Signal des Gebers (74) für ein Startsignal des Straßenfahrzeugs (1) und/oder des Bediengeräts (65) ansteuerbar ist.

5. Hubstützenanordnung nach einem der vorhergehenden Ansprüche, **dadurch gekennzeichnet, dass** die Sicherungseinrichtung (73) ein Prüfmodul (79) für die aktuelle Hubstützenstellung und ggf. eine Prüfeinrichtung (77) für den Betriebszustand des Straßenfahrzeugs (1) aufweist.

6. Hubstützenanordnung nach einem der vorhergehenden Ansprüche, **dadurch gekennzeichnet, dass** die Sicherungseinrichtung (73) das empfangene Startsignal des Gebers (74) anhand eines mit der Prüfeinrichtung (77) detektierten aktuellen Betriebszustands des Straßenfahrzeugs (1) bewertet.

7. Hubstützenanordnung nach einem der vorhergehenden Ansprüche, **dadurch gekennzeichnet, dass** die Sicherungseinrichtung (73) einen Controller (81) mit einer Controllerüberwachung (83) für die Ansteuerung eines Antriebs (40) der Hubstütze(n) (4,7) und einen Controller (82) mit einer Controllerüberwachung (83) für die Ansteuerung einer Steueranordnung (41) der Hubstütze(n) (4,7) aufweist.

8. Hubstützenanordnung nach einem der vorhergehenden Ansprüche, **dadurch gekennzeichnet, dass** die Sicherungseinrichtung (73) ein Plausibilitätsmodul (80) für die Überprüfung von Bediensignalen eines Bediengeräts (65) aufweist.

9. Hubstützenanordnung nach einem der vorhergehenden Ansprüche, **dadurch gekennzeichnet, dass** die Hubstützenanordnung (3) eine Nivelliereinrichtung (62) aufweist, wobei die Sicherungseinrichtung (73) ein Nachsetzmodul (84) für das Nachsetzen mit Bodenkontakt und mit Kraft- oder Druckbelastung von ein oder mehreren Hubstütze(n) (4,7) nach dem Nivellieren aufweist.

10. Verfahren zum Betrieb einer Hubstützenanordnung für ein motorisiertes Straßenfahrzeug (1) mit einem Fahrgestell (2), insbesondere für Wohn-, Verkaufs- oder Sondermobile, wobei die Hubstützenanordnung (3) mehrere, insbesondere vier, Hubstützen (4,7) mit einer Steuereinrichtung (57) aufweist, wobei mit einer Sicherungseinrichtung (73) der Hubstützenanordnung (3) die sichere Funktion der Hubstützen (4,7) detektiert und gesteuert wird, **dadurch gekennzeichnet, dass** mit der Sicherungseinrichtung (73) eine gefahrenträchtige Situation bei ausgefahrenen Hubstützen (4,7) über ein Startsignal eines Gebers (74) detektiert wird und bei ausgefahrenen Hubstützen (4,7) ein Warnsignal emittiert wird, das den Fahrer vor einem Wegfahren warnt und die Sicherungseinrichtung (73) die Hubstützen (4,7) in der aktuellen Stellung belässt.

11. Verfahren nach Anspruch 10, **dadurch gekennzeichnet, dass** die Sicherungseinrichtung (73) und ggf. die Steuereinrichtung (57) auf ein ggf. bewertetes Startsignal des Straßenfahrzeugs (1) und/oder ein Bediensignal eines Bediengeräts (65) aufgeweckt und aktiviert wird.

12. Verfahren nach Anspruch 10 oder 11, **dadurch gekennzeichnet, dass** die Sicherungseinrichtung (73) den Antrieb (40) und die Steueranordnung (41) einer jeweiligen Hubstütze (4,7) getrennt über Controller (81,82) ansteuert, wobei die korrekte Funktion der Controller (81,82) mit einer Controllerüberwachung (83) überprüft wird.

13. Verfahren nach Anspruch 10, 11 oder 12, **dadurch gekennzeichnet, dass** die Sicherungseinrichtung (73) auf ein Bediensignal eines Bediengeräts (65) hin die Hubstützenanordnung (3) in Abhängigkeit von einem unkritischen Betriebszustand des Straßenfahrzeugs (1) und einem positiven Prüfergebnis einer Controllerüberwachung (83) von Controllern (81,82) betätigt.

14. Verfahren nach Anspruch 13, **dadurch gekennzeichnet, dass** die Bediensignale des Bediengeräts (65) mit einem Plausibilitätsmodul (80) auf Verlässlichkeit überprüft wird.

15. Verfahren nach einem der Ansprüche 10 bis 14, **dadurch gekennzeichnet, dass** die Sicherungseinrichtung (73) nach einem Nivellieren der Hubstützenanordnung (3) die ausgefahrenen Hubstützen (4,7) auf Bodenkontakt und eine vorgegebene Kraft- oder Druckbelastung prüft und bei detektierten Unterschieden einzelne Hubstütze(n) (4,7) nachstellt.

## Claims

1. Lifting support assembly for a motorized road vehicle (1) having a chassis (2), in particular for mobile homes, sales vehicles or special-purpose vehicles, wherein the lifting support assembly (3) has a plurality of, in particular four lifting supports (4, 7) with a control device (57), wherein the lifting support assembly (3) has a safety device (73) for the safe functioning of the lifting supports (4, 7), **characterized in that** the safety device (73) has at least one interface (76, 76') which is provided and designed to form the signal-transmitting connection to a signal generator (74) for a starting signal of the road vehicle (1) and to a warning device (75) and to an operator control device (65) as well as, if appropriate, to a vehicle controller, wherein the safety device (73) is controlled in such a way that when a starting signal of the signal generator (74) is received and there is a critical position of the lifting support, in particular in the case of contact with the ground, said safety device (73) emits a warning signal via the warning device (75) and retains the current lifting support position.

2. Lifting support assembly according to Claim 1, **characterized in that** the lifting support assembly (3) is embodied as a decentralized lifting support assembly with autonomic, in particular hydraulic or motor-operated, lifting supports (4, 7).

3. Lifting support assembly according to Claim 1 or 2, **characterized in that** the lifting supports (4, 7) have an extendable support unit (9) which is designed to support itself on an underlying surface and has an actuator (36), wherein the actuator (36) contains a drive (40) and a control arrangement (41).

4. Lifting support assembly according to one of the preceding claims, **characterized in that** the safety device (73) has a wake-up module (78) for waking up the safety device (73) and, if appropriate, the control device (57), wherein the wake-up module (78) can be actuated by a signal of the signal generator (74) for a starting signal of the road vehicle (1) and/or of the operator control device (65) .

5. Lifting support assembly according to one of the preceding claims, **characterized in that** the safety device (73) has a test module (79) for the current lifting support position and, if appropriate, a test device (77) for the operating state of the road vehicle (1).

6. Lifting support assembly according to one of the preceding claims, **characterized in that** the safety device (73) evaluates the received starting signal of the signal generator (74) on the basis of a current operating state of the road vehicle (1) which is detected with the test device (77).

7. Lifting support assembly according to one of the preceding claims, **characterized in that** the safety device (73) has a controller (81) with a controller monitoring means (83) for actuating a drive (40) of the lifting support/supports (4, 7), and a controller (82) with a controller monitoring means (83) for actuating a control assembly (41) of the lifting support/supports (4, 7).

8. Lifting support assembly according to one of the preceding claims, **characterized in that** the safety device (73) has a plausibility module (80) for checking operator control signals of an operator control device (65).

9. Lifting support assembly according to one of the preceding claims, **characterized in that** the lifting support assembly (3) has a levelling device (62), wherein the safety device (73) has a resetting module (84) for resetting with ground contact and with force loading or pressure loading of one or more lifting support (s) (4, 7) after levelling.

10. Method for operating a lifting support assembly for a motorized road vehicle (1) having a chassis (2), in particular for mobile homes, sales vehicles or special-purpose vehicles, wherein the lifting support assembly (3) has a plurality of, in particular four, lifting supports (4, 7) with a control device (57), wherein the safe functioning of the lifting supports (4, 7) is detected and controlled with a safety device (73) of the lifting support assembly,
**characterized in that** the safety device (73) detects, by means of a starting signal of the signal generator (74), a hazardous situation when the lifting supports (4, 7) are extended, and when the lifting supports (4, 7) are extended a warning signal is emitted which warns the driver about driving away, and the safety device (73) retains the lifting supports (4, 7) in the current position.

11. Method according to Claim 10, **characterized in that** the safety device (73) and, if appropriate, the control device (57) are woken up and activated in response to an, if appropriate, evaluated starting signal of the road vehicle (1) and/or an operator control signal of an operator control device (65).

12. Method according to Claim 10 or 11, **characterized in that** the safety device (73) actuates the driver (40) and the control assembly (41) of a respective lifting support (4, 7) separately by means of controllers (81, 82), wherein the correct functioning of the controllers (81, 82) is checked with a control monitoring means (83).

13. Method according to Claim 10, 11 or 12, **characterized in that** the safety device (73) activates the lifting support assembly (3) in response to an operator control signal of an operator control device (65), as a function of a non-critical operating state of the road vehicle (1) and a positive test result of a controller monitoring means (83) of controllers (81, 82).

14. Method according to Claim 13, **characterized in that** the operator control signals of the operator control device (65) are checked for reliability with the plausibility module (80).

15. Method according to one of Claims 10 to 14, **characterized in that** after levelling of the lifting support assembly (3), the safety device (73) tests the extended lifting supports (4, 7) for contact with the ground and tests a predefined force loading or pressure loading, and when differences are detected it adjusts (an) individual lifting support (s) (4, 7).

## Revendications

1. Arrangement de béquilles de levage pour un véhicule routier (1) motorisé, comprenant un châssis de roulement (2), notamment pour des camping-cars, des voitures-échoppes ou des véhicules à usage spécial, l'arrangement de béquilles de levage (3) possédant plusieurs, notamment quatre béquilles de levage (4, 7) avec un dispositif de commande (57), l'arrangement de béquilles de levage (3) possédant un dispositif de sécurité (73) pour le fonctionnement sécurisé des béquilles de levage (4, 7), **caractérisé en ce que** le dispositif de sécurité (73) possède au moins une interface (76, 76') qui est conçue et configurée pour la liaison signalétique avec un transmetteur (74) pour un signal de démarrage du véhicule routier (1) et avec un dispositif d'alerte (75) et avec un appareil d'opération (65) et aussi éventuellement avec une commande de véhicule, le dispositif de sécurité (73) étant commandé de telle sorte qu'en présence d'un signal de démarrage reçu du transmetteur (74) et qu'en cas d'une position critique des béquilles de levage, notamment en cas de contact avec le sol, il émet un signal d'alerte par le biais du dispositif d'alerte (75) et maintient la position actuelle des béquilles de levage.

2. Arrangement de béquilles de levage selon la revendication 1, **caractérisé en ce que** l'arrangement de béquilles de levage (3) est réalisé sous la forme d'un arrangement de béquilles de levage décentralisé avec des béquilles de levage (4, 7) autonomes, notamment hydrauliques ou motorisées.

3. Arrangement de béquilles de levage selon la revendication 1 ou 2, **caractérisé en ce que** les béquilles de levage (4, 7) possèdent une unité de béquille (9), extensible et configurée pour prendre appui elle-même sur un sol, comprenant un actionneur (36), l'actionneur (36) contenant un mécanisme d'entraînement (40) et un arrangement de commande (41).

4. Arrangement de béquilles de levage selon l'une des revendications précédentes, **caractérisé en ce que** le dispositif de sécurité (73) possède un module de réveil (78) destiné à réveiller le dispositif de sécurité (73) et éventuellement le dispositif de commande (57), le module de réveil (78) pouvant être piloté par un signal du transmetteur (74) pour un signal de démarrage du véhicule routier (1) et/ou de l'appareil d'opération (65).

5. Arrangement de béquilles de levage selon l'une des revendications précédentes, **caractérisé en ce que** le dispositif de sécurité (73) possède un module de contrôle (79) pour la position actuelle des béquilles de levage et éventuellement un dispositif de contrôle (77) pour l'état de fonctionnement du véhicule routier (1) .

6. Arrangement de béquilles de levage selon l'une des revendications précédentes, **caractérisé en ce que** le dispositif de sécurité (73) évalue le signal de démarrage reçu du transmetteur (74) à l'aide d'un état de fonctionnement actuel du véhicule routier (1) détecté avec le dispositif de contrôle (77).

7. Arrangement de béquilles de levage selon l'une des revendications précédentes, **caractérisé en ce que** le dispositif de sécurité (73) possède un contrôleur (81) avec une surveillance de contrôleur (83) pour le pilotage d'un mécanisme d'entraînement (40) de la ou des béquilles de levage (4, 7) et un contrôleur (82) avec une surveillance de contrôleur (83) pour le pilotage d'un arrangement de commande (41) de la ou des béquilles de levage (4, 7).

8. Arrangement de béquilles de levage selon l'une des revendications précédentes, **caractérisé en ce que** le dispositif de sécurité (73) possède un module de plausibilité (80) pour le contrôle des signaux d'opération d'un appareil d'opération (65).

9. Arrangement de béquilles de levage selon l'une des revendications précédentes, **caractérisé en ce que** l'arrangement de béquilles de levage (3) possède un dispositif de mise à niveau (62), le dispositif de sécurité (73) possédant un module de réajustement (84) pour le réajustement avec contact avec le sol et avec sollicitation par force ou par pression d'une ou plusieurs béquilles de levage (4, 7) après la mise à niveau.

10. Procédé pour faire fonctionner un arrangement de béquilles de levage pour un véhicule routier (1) motorisé, comprenant un châssis de roulement (2), notamment pour des camping-cars, des voitures-échoppes ou des véhicules à usage spécial, l'arrangement de béquilles de levage (3) possédant plusieurs, notamment quatre béquilles de levage (4, 7) avec un dispositif de commande (57), le fonctionnement sécurisé des béquilles de levage (4, 7) étant détecté et commandé par un dispositif de sécurité (73) de l'arrangement de béquilles de levage (3), **caractérisé en ce qu'**une situation dangereuse est détectée avec le dispositif de sécurité (73) lorsque les béquilles de levage (4, 7) sont sorties par le biais d'un signal de démarrage d'un transmetteur (74) et un signal d'alerte est émis lorsque les béquilles de levage (4, 7) sont sorties, lequel alerte le conducteur avant de prendre la route et le dispositif de sécurité (73) maintient les béquilles de levage (4, 7) dans la position actuelle.

11. Procédé selon la revendication 10, **caractérisé en ce que** le dispositif de sécurité (73) et éventuellement le dispositif de commande (57) sont réveillés et activés sur un signal de démarrage éventuellement évalué du véhicule routier (1) et/ou un signal d'opération d'un appareil d'opération (65).

12. Procédé selon la revendication 10 ou 11, **caractérisé en ce que** le dispositif de sécurité (73) pilote séparément le mécanisme d'entraînement (40) et l'arrangement de commande (41) d'une béquille de levage (4, 7) respective par le biais de contrôleurs (81, 82), le fonctionnement correct des contrôleurs (81, 82) étant contrôlé par une surveillance de contrôleur (83).

13. Procédé selon la revendication 10, 11 ou 12, **caractérisé en ce que** le dispositif de sécurité (73) actionne l'arrangement de béquilles de levage (3) sur un signal d'opération d'un appareil d'opération (65) en fonction d'un état de fonctionnement non critique du véhicule routier (1) et d'un résultat de contrôle positif d'une surveillance de contrôleur (83) des contrôleurs (81, 82).

14. Procédé selon la revendication 13, **caractérisé en ce que** la fiabilité des signaux d'opération de l'appareil d'opération (65) est contrôlée avec un module de plausibilité (80).

15. Procédé selon l'une des revendications 10 à 14, **caractérisé en ce que** le dispositif de sécurité (73), après la mise à niveau de l'arrangement de béquilles de levage (3), contrôle le contact avec le sol et une sollicitation prédéfinie par force ou pression des béquilles de levage (4, 7) sorties et réajuste les béquilles de levage (4, 7) individuelles en présence de différences détectées.
